(19) **Europäisches Patentamt / European Patent Office / Office européen des brevets**

(11) **EP 2 671 103 B1**

(12) **EUROPEAN PATENT SPECIFICATION**

(45) Date of publication and mention of the grant of the patent:
**01.11.2017 Bulletin 2017/44**

(51) Int Cl.:
***G01W 1/00*** *(2006.01)*     ***G01N 21/47*** *(2006.01)*
***G01W 1/10*** *(2006.01)*

(21) Application number: **11857829.3**

(22) Date of filing: **02.02.2011**

(86) International application number:
**PCT/US2011/023516**

(87) International publication number:
**WO 2012/105973 (09.08.2012 Gazette 2012/32)**

(54) **ATMOSPHERIC MEASUREMENT SYSTEM AND METHOD**

SYSTEM UND VERFAHREN ZUR ATMOSPHÄRENMESSUNG

SYSTÈME ET PROCÉDÉ DE MESURE ATMOSPHÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.12.2013 Bulletin 2013/50**

(73) Proprietor: **Michigan Aerospace Corporation Ann Arbor, Michigan 48108-2285 (US)**

(72) Inventors:
• **TCHORYK, Peter, Jr.**
  **Ann Arbor, Michigan 48103 (US)**
• **ZUK, David Michael**
  **Dexter, Michigan 48130 (US)**
• **JOHNSON, David Keith**
  **Canton, Michigan 48187 (US)**
• **RICHEY, Charles J.**
  **Ypsilanti, Michigan 48197 (US)**
• **TAYEBATI, Parviz**
  **Sherborn, MA 01770-1622 (US)**

(74) Representative: **Puschmann Borchert Bardehle Patentanwälte Partnerschaft mbB Postfach 10 12 31 80086 München (DE)**

(56) References cited:
EP-A1- 1 790 997     JP-A- 11 133 049
JP-A- 2000 147 120   JP-A- 2004 101 265
JP-A- 2006 125 961   US-A- 4 483 614
US-A1- 2003 219 252  US-A1- 2006 262 324
US-B1- 7 580 127

## Description

The invention relates to a method and system of remotely sensing an atmosphere.

According to US 2006/262324 A1, a first beam of light from a laser is split by a beam splitter into a reference beam and at least one second beam of light, the latter of which is directed into an atmosphere. Light from the at least one second beam of light scattered by molecules or aerosols in the atmosphere is collected by at least one telescope as at least one light signal. The at least one light signal and the reference beam ae simultaneously processed by a common interferometer, and resulting fringe patterns are imaged onto a detector and processed by a data processor to determine at least one associated air data product. In particular, the optical air data system, comprises a laser adapted to generate a first beam of light; at least one beam splitter operatively associated with said first beam of light, wherein said at least one beam splitter splits said first beam of light from said laser into a reference beam and at least one second beam of light, and said at least one second beam of light is directed into an atmosphere along an associated axis; at least one telescope adapted to receive light backscattered by molecules or aerosols of said atmosphere responsive to a corresponding at least one said second beam of light; an interferometer, wherein a first portion of said interferometer is adapted to receive a light signal from said light backscattered by said molecules or aerosols of said atmosphere, at least one second portion of said interferometer is adapted to receive at least one of said reference beam and at least one other light signal from said light backscattered by said molecules or aerosols of said atmosphere, said interferometer is operative to generate a first fringe pattern associated with said light signal from said light backscattered by said molecules or aerosols of said atmosphere, and said interferometer is operative to generate at least one second fringe pattern associated with said at least one of said reference beam and at least one other light signal from said light backscattered by said molecules or aerosols of said atmosphere; at least one detector, wherein said at least one detector is adapted to detect said first fringe pattern and said at least one second fringe pattern, and said at least one detector is adapted to output a corresponding resulting at least one signal; and a data processor adapted to determine at least one air data product responsive to said at least one signal.

According to US 2003/219252 A1, a compact optical instrument called Molecular Optical Air Data System (MOADS) can directly measure wind speed and direction, density, and temperature of a body of air. From these measurements, a complete set of air data products can be determined. In contrast to pitot tubes, however, MOADS can operate at high angles of attack. In the proper configuration, MOADS can continue to measure air data products at angles of attack of 90 degrees. The MOADS instrument is a flush-mount design which lends itself to low observability since there are no aircraft protrusions to generate a radar cross section. MOADS is also airframe independent, and is much less costly to calibrate, recalibrate or service due to this lack of dependence.; The system uses a Fabry-Pérot interferometer to detect the (incoherent) Doppler shift from laser light backscattered by air molecules and aerosols (Rayleigh and Mie scattering). The laser used to provide the signal utilizes short wavelengths operating in the ultraviolet at 266 nm, which is invisible to the human eye and rapidly absorbed by the atmosphere. Although the system will take advantage of aerosols when they are available, a significant advantage of MOADS over similar air data system technologies is the ability to make measurements in clear air (air molecules only), without the presence of aerosols, which also provides the ability to measure density and temperature.

US 4 483 614 A discloses a radiation fringe velocimeter subsystem and a subsystem for determining air density related parameters, are combined into a single optical system which permits various important parameters associated with the operation of an aircraft to be measured at a sample location at a sufficient distance from the aircraft (or any physical attachment thereto) so that the measurements will not be subject to systemic errors such as those caused by air compression effects and airflow disturbances, and which does not require that any Pitot tubes, pressure ports or other similar mechanical devices protrude into the airstream where the measurements are to be made. The combined system contains a laser or other suitable source of radiation as well as an optical arrangement for transmitting the radiation from the laser to a sample volume in order both to form linearly independent sets of radiation fringes at the sample location as well as to focus the radiation at the sample location so as to cause selected air molecules to fluoresce. The device also contains an optical receiving arrangement for focusing backscattered radiation and fluorescent emissions from the sample volume onto one or more photodetectors. By using a radiation source (such as a Q-switched laser) that can be quickly switched between an On state and Off state, it is possible to utilize a single photodetector, since the backscattered radiation will cease as soon as the radiation is turned off, but the fluorescent emissions will decay exponentially.

It is an objective of the invention to provide for increasing the lifetime of the overall LIDAR system while providing for measurements of at least velocity V from either completely clear air, devoid of aerosols or from air containing sufficient aerosol content.

For this purpose, the method of the invention comprises the features of claim 1, and the system of the invention comprises the features of claim 8. Preferred embodiments of the invention are characterized in the sub-claims.

The dual operating mode of the invention provides for increasing the lifetime of the overall LIDAR system by reducing the duty cycle of operation during either the first or second modes of operation, particularly for the second mode of operation when using the second wavelength, e.g. ultraviolet wavelength of substantially monochromatic light, while providing for measurements of at least velocity V from either completely clear air, devoid of aerosols while using the second wavelength - e.g. an ultraviolet wavelength,-- or from air containing sufficient aerosol content to use the first wavelength - e.g. an infrared light wavelength or visible light wavelength.

Brief description of the Figures:

FIG. 1a illustrates a first set of embodiments of a first aspect of a range-imaging LIDAR system incorporated in a first aspect of an atmospheric measurement system;

FIG. 1b illustrates a transverse cross-section of a first embodiment of a beam of light;

FIG. 1c illustrates a transverse cross-section of a second embodiment of a beam of light;

FIG. 1d illustrates a second aspect of a Fabry-Perot interferometer of a range- imaging LIDAR system;

FIG. 2 illustrates a second aspect of an interferometer comprising a Michelson interferometer configured as Fourier Transform Spectrometer, used in cooperation with a fourth aspect of an associated detection system;

FIG. 3a illustrates a third aspect of an interferometer comprising a Spatial Heterodyne Spectrometer (SHS) used in cooperation with a fifth aspect of an associated detection system;

FIG. 3b illustrates the operation of each diffraction grating that is incorporated in the Spatial Heterodyne Spectrometer illustrated in FIG. 1A18a;

FIG. 4 illustrates a fourth aspect of an interferometer comprising a Doppler Asymmetric Spatial Heterodyne (DASH) Spectrometer used in cooperation with the fifth aspect of an associated detection system;

FIG. 5 illustrates output images of the fourth aspect of the interferometer illustrated in FIG.4, for corresponding inputs comprising two light signals, one substantially monochromatic, and the other slightly Doppler-shifted with respect thereto;

FIG. 6 illustrates the output image of the fourth aspect of the interferometer illustrated in FIG. 4, for corresponding inputs comprising two light signals, one a temperature -broadened scattered light signal, the other slightly Doppler-shifted with respect thereto, together with a plot of the difference therebetween;

FIG. 7a illustrates a top view of an embodiment of the fourth aspect of the interferometer, portions of which are otherwise shown schematically in 4;

FIG. 7b illustrates a side view of the embodiment of the fourth aspect of the interferometer illustrated in FIG. 7a;

FIG. 7c illustrates a magnified view of the formation of the image illustrated in FIG. 7b;

FIGS. 8a and 8b illustrate a twentieth aspect of a LIDAR system incorporated in a second aspect of an atmospheric measurement system and an image associated therewith;

FIGS. 9a and 9b illustrate a first embodiment of a twenty-first aspect of a LIDAR system incorporated in a second aspect of an atmospheric measurement system and various images associated therewith, corresponding to the ninth aspect of the LIDAR system illustrated in FIG. 64 but with either a third or fourth aspect of the associated interferometer;

FIGS. 10a to 10d illustrate a first embodiment of a twenty-second aspect of a LIDAR system incorporated in a second aspect of an atmospheric measurement system and various images associated therewith.

FIGS. 11a and 11b illustrate a second embodiment of the twenty-first aspect of a LIDAR system incorporated in a second aspect of an atmospheric measurement system and various images associated therewith, corresponding to the thirteenth aspect of a LIDAR system but with either a third or fourth aspect of the associated interferometer;

FIGS. 12a to 12d illustrate a LIDAR system incorporated in an atmospheric measurement system and various images associated therewith;

FIGS. 13a to 13d illustrate a t range-imaging LIDAR system and various images associated therewith;

FIGS.14a and 14b illustrate a range-imaging LIDAR system and an image associated therewith;

FIG. 15 illustrates a side view of a portion of the wind farm , but illustrating two embodiments of an associated atmospheric measurement system, each embodiment incorporating a pair of LIDAR systems;

FIG. 16 illustrates a twenty-fifth aspect of a LIDAR system in accordance with an atmospheric measurement system providing for operation at a plurality of different wavelengths;

FIG. 17 illustrates a flow chart of an atmospheric measurement process using a dual-wavelength atmospheric measurement system;

FIG. 18 illustrates the application of an atmospheric measurement system to wind turbine site assessment for purposes of determining a location for one or more wind turbines;

FIG. 19 illustrates a flow chart of a wind turbine site assessment process;

FIG. 20 illustrates the application of an atmospheric measurement system to either wind turbine control or wind turbine power validation;

FIG. 21 illustrates the application of an atmospheric measurement system to either wind turbine control or wind turbine power validation;

FIG. 22 illustrates a flow chart of a wind turbine power validation process; and

FIG. 23 illustrates the application of the first embodiment of the seventh aspect of an atmospheric measurement system to the characterization of wake flow behind a wind turbine.

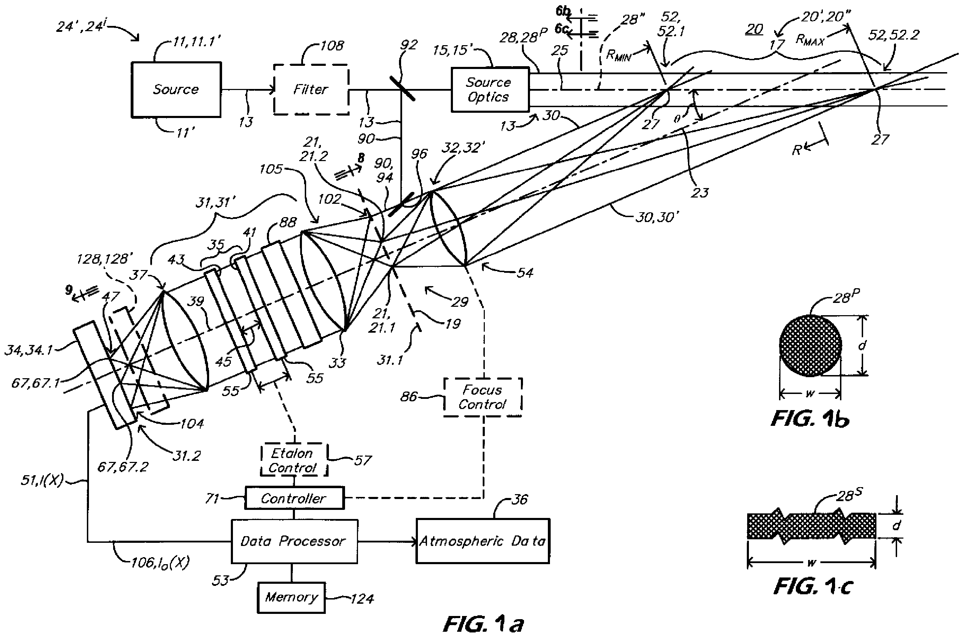

Referring to 1a, a range-imaging LIDAR system 24', 24' incorporated in a first aspect of an atmospheric measurement system 10' incorporates a light source 11 that provides for generating at least substantially monochromatic light 13, which is projected into the atmosphere 20 as a beam of light 28 through and by associated source optics 15. For example, the source optics 15 may comprise a lens assembly 15' that provides for the width and divergence of the beam of light 28, and a suitable location of the associated beam waist thereof, so as to illuminate an interaction region 17 within the atmosphere 20 that is detectable by the range-imaging LIDAR system 24', 24', wherein the beam width within the interaction region 17 establishes the associated transverse spatial resolution limit of the range-imaging LIDAR system 24', 24'. For example, referring to FIG. 1b, the source optics 15 may be configured so as to provide for a pencil-like beam of light 28<p> having a limited width w and depth d, for example, of circular or elliptical cross-section, so as to limit the associated width w and depth d of the associated interaction region 17. As another example, referring to FIG. 1c, the source optics 15 may be configured so as to provide for a sheet- like beam of light 28 - for example, using source optics 15 comprising cylindrical optics - having a limited depth d but an extended width w, for example, so as provide for an associated interaction region 17 with a corresponding extended width w, so as to provide for probing extending regions of the atmosphere 20.

A set of receive optics 32, for example, a telescope 32', laterally offset from the beam of light 28, provides for imaging a portion of the beam of light 28 onto an intermediate image plane 19, so as to provide for a one-to-one mapping of measurement volumes 52 within the beam of light 28 and corresponding associated regions or points 21 in the intermediate image plane 19. More particularly, the beam of light 28 illuminates molecules 20' or aerosols 20" of the atmosphere 20, or a combination thereof, within the interaction region 17, which in turn scatter the monochromatic light 13 of the beam of light 28. The resulting scattered light 30 within the field-of-view 54 of the receive optics 32 is collected thereby and imaged onto the intermediate image plane 19. The receive optics 32 is laterally offset from and points towards the beam of light 28, so that the optic axis 23 of the receive optics 32 is inclined relative to the optic axis 25 of the beam of light 28 at an associated parallax angle [Theta]. Accordingly, each measurement volume 52 of the beam of light 28 imaged onto a corresponding region or point 21 on the intermediate image plane 19 corresponds to a different nominal range R from the intermediate image plane 19 to a point 27 on the optic axis 25 of the beam of light 28 associated with the corresponding measurement volume 52. Accordingly, each region or point 21 on the intermediate image plane 19, corresponding to the measurement volume 52 of the beam of light 28 within the field-of-view 54 of the receive optics 32, corresponds to a different nominal range R. Accordingly, different regions or points 21 of the intermediate image 29 in the intermediate image plane 19 correspond to different nominal ranges R to the beam of light 28, and therefore correspond to different nominal ranges R to the associated measurement volumes 52 thereof within the interaction region 17. For example, as illustrated in FIG. 1a, a closest measurement volume 52.1 of the beam of light 28 within the field-of-view 54 of the receive optics 32 located at a closest nominal range RMIN from the intermediate image plane 19 is imaged as a corresponding first region or point 21.1 on the intermediate image plane 19, and a farthest measurement volume 52.2 of the beam of light 28 within the field-of-view 54 of the receive optics 32 located at a farthest nominal range RMAX from the intermediate image plane 19 is imaged as a corresponding second region or point 21.2 on the intermediate image plane 19. Furthermore, scattered light 30 from different measurement volumes 52 is imaged onto the intermediate image plane 19 at corresponding different angles of incidence relative thereto. The range R to the interaction region 17 is defined by the geometry of the associated beam of light 28 and the corresponding receive optics 32. The receive optics 32 can be in focus for one of a plurality of different ranges to the beam of light 28, so that for measurement volumes 52 of the beam of light 28 not in focus, the corresponding images thereof in the intermediate image plane 19, i.e. the corresponding regions or points 21 thereon, will be unfocused and therefore blurred. The range R within the interaction region 17 can optionally be further resolved with associated temporal range gating, or range-resolved imaging, of the associated scattered light 30 if desired or necessary for a particular application.

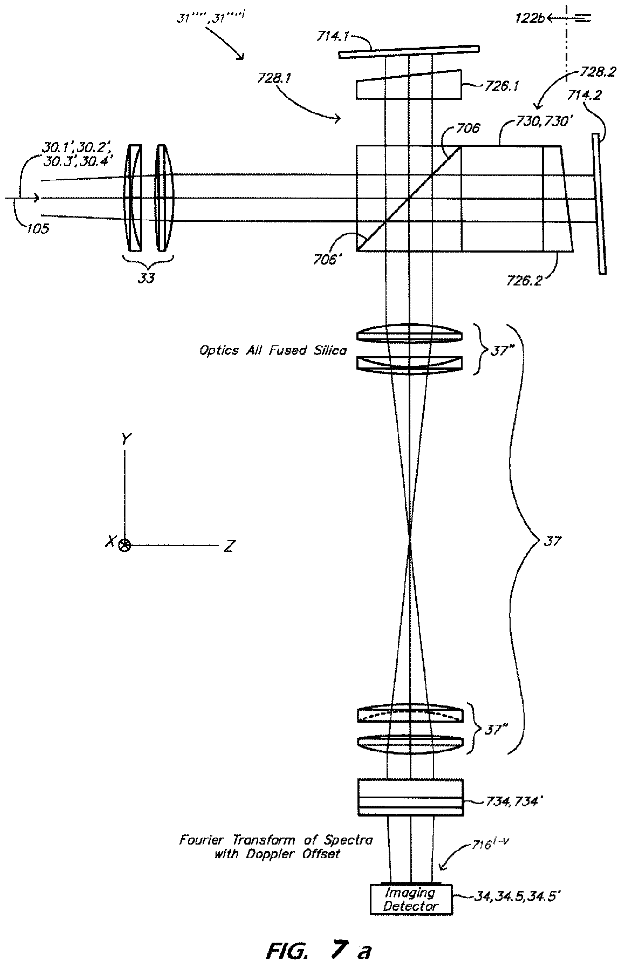

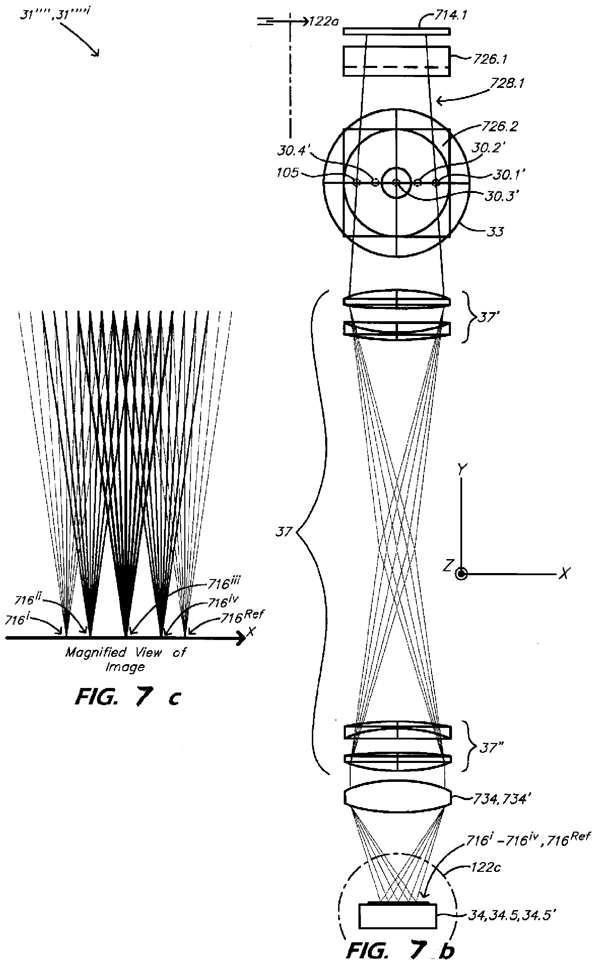

The range-imaging LIDAR system 24', 24' further comprises an interferometer 31, for example, in accordance with a first aspect, a Fabry-Perot interferometer 31' having an input focal plane 31.1' and an output focal plane 31.2'. The input focal plane 31.1' is collocated with the intermediate image plane 19 so as to receive scattered light 30 therefrom, which is then processed by the Fabry-Perot interferometer 31' and imaged onto a detection system 34 located at the output focal plane 31.2'. Between the input 31.1' and output 31.2' focal planes, the Fabry-Perot interferometer 31' comprises a collimating lens 33, a Fabry-Perot etalon 35, and imaging optics 37 spaced along an associated common optic axis 39, wherein the input focal plane 31.1' is a focal plane of the collimating lens 33, the output focal plane 31.2' is a focal plane of the imaging optics 37, and scattered light 30 at the input focal plane 31.1' entering the collimating lens 33 is substantially collimated thereby, then processed by the Fabry-Perot etalon 35, and finally imaged onto the detection system 34 by the imaging optics 37. The Fabry-Perot etalon 35 of the Fabry-Perot interferometer 31' comprises first 41 and second 43 partially- reflective surfaces that are parallel to one another and separated by a fixed gap 45. The angles at which the scattered light 30 is passed through the Fabry-Perot etalon 35 is dependent upon the optical frequency of the scattered light 30 and the length of the gap 45, resulting in an associated scatter fringe pattern 47 comprising a plurality of concentric arcuate fringes 49' - also known as Haidinger fringes- in the output focal plane 31.2' of the Fabry-Perot interferometer 31', for example, as illustrated in FIG. 7 for a fully illuminated Fabry-Perot interferometer 31'. The scatter fringe pattern 47 is imaged onto the detection system 34 that generates a scatter electronic image signal 51 responsive thereto which is then processed as described hereinbelow by an associated data processor 53 so as to generate a corresponding set of atmospheric data 36 from information in the scatter fringe pattern 47.

For example, in one embodiment, the Fabry-Perot etalon 35 comprises a pair of planar optical windows 55 - for example, constructed of either optical glass or fused quartz- aligned parallel to and facing one another, and spaced apart from one another by the gap 45, wherein, for example, the first 41 and second 43 partially-reflective surfaces - e.g. partially-silvered surfaces or other partially-reflective surfaces- are on separate facing surfaces of the planar optical windows 55. Alternatively, the first 41 and second 43 partially-reflective surfaces could be on the outside opposing faces of the planar optical windows 55, or one of the first 41 and second 43 partially-reflective surfaces could be on a inner facing surface of one of the planar optical windows 55, and the other of the first 41 and second 43 partially-reflective surfaces could be on a outer facing surface of the other of the planar optical windows 55. In one embodiment, the gap 45 is substantially fixed, whereas in other embodiments, the gap 45 is moveable, e.g. adjustable, for example, using an etalon control actuator 57 responsive to a controller 71 operatively associated with or a part of the data processor 53, so as to provide for a tunable Fabry-Perot etalon 35.

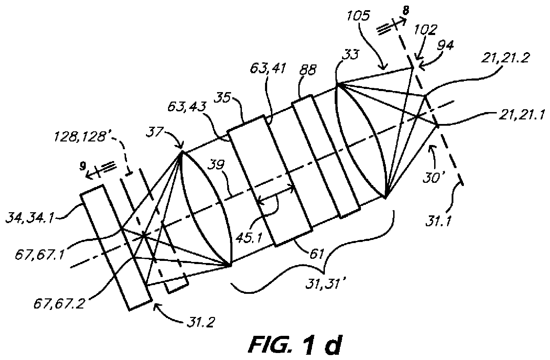

Referring to FIG. 1d, alternatively, the Fabry-Perot etalon 35 could comprise a solid optical element 61 - for example, constructed of either optical glass or fused quartz - - with planar parallel faces 63 comprising first 41 and second 43 partially-reflective surfaces separated by a gap 45.1 constituting the length of the solid optical element 61.

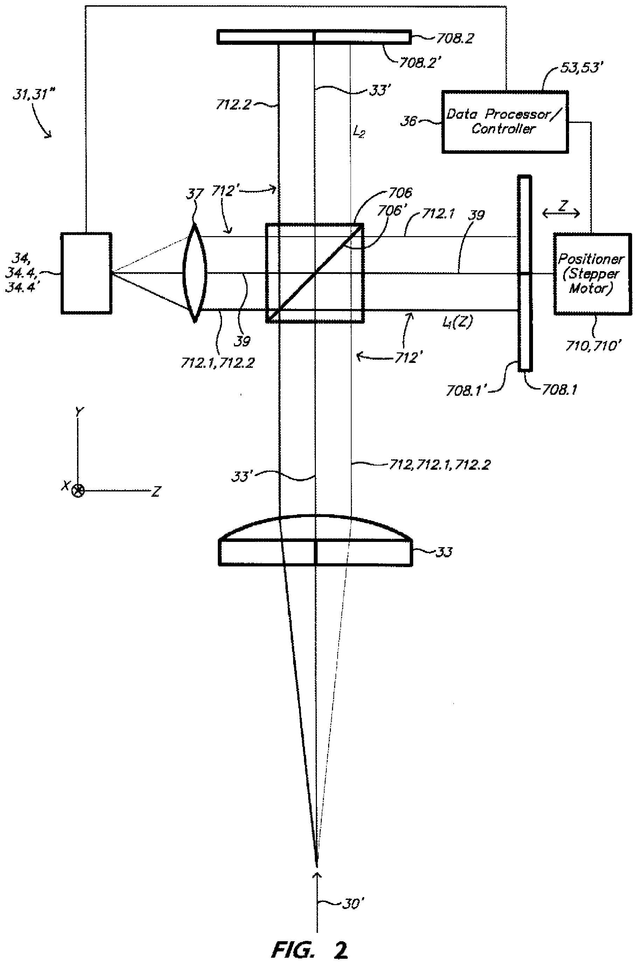

For example, referring to FIG. 2, in accordance with a second aspect, the interferometer 31 comprises a tunable Michelson interferometer 31" comprising a collimating lens 33, a beam splitter 706, first 708.1 and second 708.2 planar mirrors, a positioner 710 operatively associated with one of the first 708.1 and second 708.2 planar mirrors - illustrated in FIG. 2 operatively associated with the first planar mirror 708.1 - and associated imaging optics 37, wherein the tunable Michelson interferometer 31" can be substituted for the Fabry-Perot interferometer 31' while maintaining the relationships between the collimating lens 33 and the imaging optics 37 with the remainder of the elements of the LIDAR systems being the same as for the Fabry-Perot interferometer 31'. The collimating lens 33 having an associated optic axis 33' provides for transforming the scattered light signal 30' into a collimated beam of light 712 that propagates along the optic axis 33' to the beam splitter 706 located between the collimating lens 33 and the second planar mirror 708.2, and between the imaging optics 37 and the first planar mirror 708.1. A partially reflective surface 706' of the beam splitter 706, for example, with 50% reflectivity, is oriented at a substantially 45 degree angle with respect to the optic axis 33' of the collimating lens 33, and is oriented at a substantially 45 degree angle with respect to the optic axis 39 of the imaging optics 37, wherein the associated optic axes 33', 39 are substantially normal with respect to one another, the reflective surface 708.1' of the first planar mirror 708.1 is substantially normal to the optic axis 39 of the imaging optics 37, the reflective surface 708.2' of the second planar mirror 708.2 is substantially normal to the optic axis 33' of the collimating lens 33, and the planes of the partially reflective surface 706' and the first 708.1 and second 708.2 planar mirrors are each substantially normal to the Y-Z plane illustrated in FIG. 2 In operation, a first portion 712.1 of the collimated beam of light 712 is reflected from the partially reflective surface 706' of the beam splitter 706, towards the first planar mirror 708.1 along the optic axis 39 of the imaging optics 37 and is reflected back along the optic axis 39 by the reflective surface 708.1' of the first planar mirror 708.1, after which the first portion 712.1 of the collimated beam of light 712 propagates through the partially reflective surface 706' of the beam splitter 706, and then propogates to the imaging optics 37 along the optic axis 39 thereof. A second portion 712.2 of the collimated beam of light 712 propagates through the partially reflective surface 706' of the beam splitter 706 towards the second planar mirror 708.2 along the optic axis 33' of the collimating lens 33, and is reflected back along the optic axis 33' by the reflective surface 708.1' of the first planar mirror 708.1, and is then reflected from the partially reflective surface 706' of the beam splitter 706 to the imaging optics 37 along the optic axis 39 thereof. The first 712.1 and second 712.2 portions of the collimated beam of light 712 comprise plane waves 712' that are relatively coherent and interfere with one another when mixed following the respective transmission through or reflection from the partially reflective surface 706' of the beam splitter 706, wherein the resulting inference is dependent upon the optical path difference [delta] of the first 712.1 and second 712.2 portions of the collimated beam of light 712, given by:

$$S\{z\} = Ll\ (z)\ -L2$$

(97) The resulting fringes of the associated interfering plane waves 712' are imaged by the imaging optics 37 at the focal plane 37.2 onto a photodetector 34.4' of an associated fourth aspect of a detection system 34, 34.4, and the intensity of the resulting detected signal at a particular wave number for a particular optical path difference is given byan equation known per se.

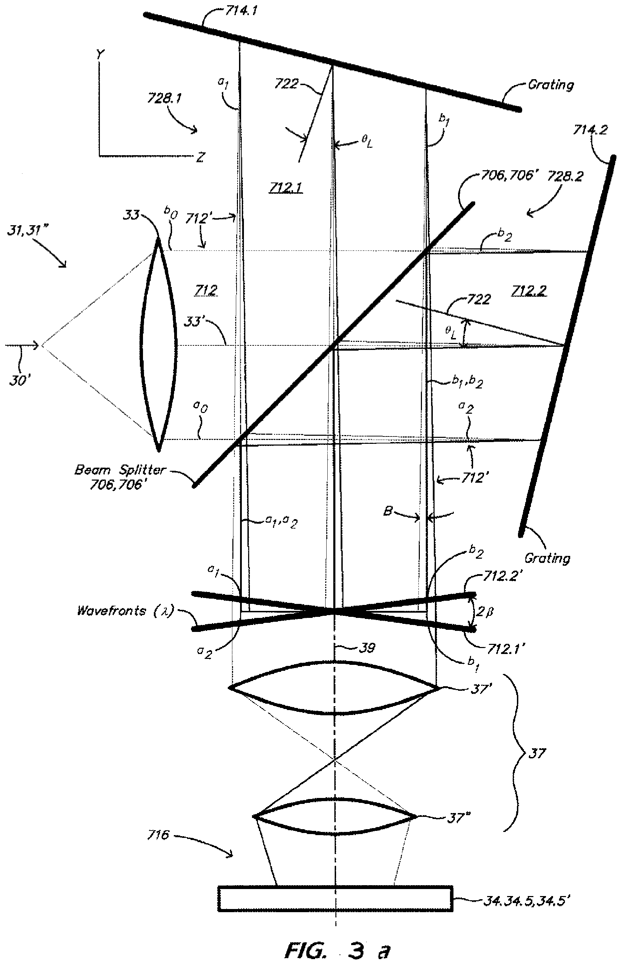

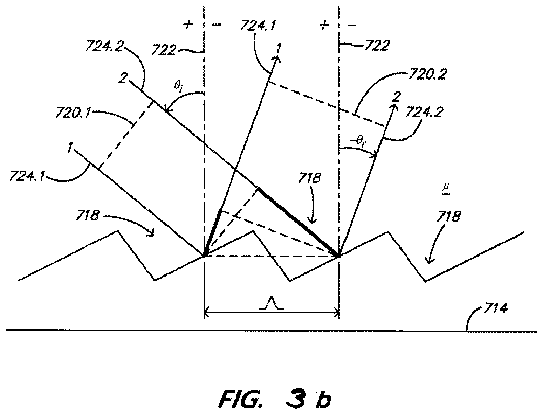

For example, for the embodiment illustrated in FIG.2, the series of measurements of total intensity are made by using the positioner 710, for example, a stepper motor 710', to scan the position of the first planar mirror 708.1 along the "Z" axis responsive to a signal from an associated data processor 53/controller 53', thereby adjusting the first path length Lj(z), and the optical path difference responsive thereto, and acquiring the associated total intensity from the photodetector 34.4' at each scanned position. The resulting series of measurements of total intensity is then transformed by the associated data processor 53 using a Discrete Inverse Fourier Transform. The resulting spectral distribution may then be used to determine the associated atmospheric data 36 in accordance with a methodology similar to that described hereinabove for the Fabry-Perot interferometer 31', wherein the transmission J of the Fabry-Perot interferometer 31' is replaced with the transmission function of the tunable Michelson interferometer 31" which to a first order is represented by a Fourier transform, which can then be used with the same Levenberg-Marquardt nonlinear least squares method as described hereinabove, using the same broadening functions that account for Doppler, Laser Spectral Width, Scattering, and Turbulent Motion broadening in the inversion of the data from the tunable Michelson interferometer 31". As another example, referring to FIG. 3, in accordance with a third aspect, the interferometer 31 comprises a Spatial Heterodyne Spectrometer (SHS) 31''' comprising a collimating lens 33, a beam splitter 706, first 714.1 and second 714.2 diffraction gratings, and associated imaging optics 37, wherein the Spatial Heterodyne Spectrometer (SHS) 31''' can be substituted for the Fabry-Perot interferometer 31' in any of the above described LIDAR systems while maintaining the relationships between the collimating lens 33 and the imaging optics 37 with the remainder of the elements of the LIDAR systems being the same as for the Fabry-Perot interferometer 31'. The Spatial Heterodyne Spectrometer (SHS) 31''' is described in the following references US-A-5,059,027; John M. Harlander, Fred L. Roesler, Joel G. Cardon, Christoph R. Englert, and Robert R. Conway, "SHIMMER: a spatial heterodyne spectrometer for remote sensing of Earth's middle atmosphere," Applied Optics 41, 1343-1352 (2002); John M. Harlander, Fred L.Roesler, Christoph R. Englert, Joel Cardon, and Jeff Wimperis, "Spatial Heterodyne Spectroscopy for High Spectral Resolution Space-Based Remote Sensing', Optics & Photonics News, 551,46-51 (2004); Ian Powell and Pavel Cheben, "Modeling of the generic spatial heterodyne spectrometer and comparison with conventional spectrometer," Applied Optics, 36, 9079-9086 (2006); US-A-7,535,572 B2; and U.S. Patent Application Publication No. 2009/0231592;.

The Spatial Heterodyne Spectrometer (SHS) 31''' is a two beam dispersive interferometer similar to a Michelson interferometer, but with the associated first 708.1 and second 708.2 planar mirrors replaced with corresponding first 714.1 and second 714.2 diffraction gratings, each tilted at the Litrow angle 0L relative to the corresponding associated optic axes 33', 39 so as to provide for generating a Fizeau fringe pattern 716 in the imaging plane 31.2' of the associated imaging optics 37, wherein the Fizeau fringe pattern 716 comprises a spatial Fourier Transform of the spectral distribution [lota]([sigma]) of the associated scattered light signal 30' that is input to the Spatial Heterodyne Spectrometer (SHS) 31''' - but without the moving parts of the tunable Michelson interferometer 31" described hereinabove - wherein all associated spectral components are processed simultaneously rather than over time.

More particularly, the collimating lens 33 having an associated optic axis 33' provides for transforming the scattered light signal 30' into a collimated beam of light 712 that propagates along the optic axis 33' to the beam splitter 706 located between the collimating lens 33 and the second diffraction grating 714.2, and between the imaging optics 37 and the first diffraction grating 714.1. A partially reflective surface 706' of the beam splitter 706, for example, with 50% reflectivity, is oriented at a substantially 45 degree angle with respect to the optic axis 33' of the collimating lens 33, and is oriented at a substantially 45 degree angle with respect to the optic axis 39 of the imaging optics 37, wherein the associated optic axes 33', 39 are substantially normal with respect to one another, and the plane of the partially reflective surface 706' is substantially normal to the Y-Z plane illustrated in FIG. 3a.

Referring to FIG. 3b, each diffraction grating 714 of the first 714.1 and second 714.2 diffraction gratings comprises a plurality of periodically-spaced grooves 718 having an associated grating pitch [Lambda], wherein an incident plane wave 720.1 incident at an angle #. relative to a normal 722 to the diffraction grating 714 is diffracted at a diffraction-order-dependent angle 9r as an associated diffracted plane wave 720.2, wherein for operation in a medium having an index of refraction [mu], the relationship between diffraction order m, wave number [sigma], grating pitch [Lambda] and the associated angles [theta][iota], 0r is given by the diffraction equation that provides for constructive interference between corresponding rays 724.1, 724.2 of the incident plane wave 720.1 upon diffraction from different periodically-spaced grooves 718 of the diffraction grating 714, as follows: [tau][eta][lambda] =- = [mu][Alpha] (sin 0t + sin 0r) [sigma] (101) wherein angles [theta][tau] are positive when measured counter-clockwise from the normal 722. In a Littrow mode of operation, the incident plane wave 720.1 is diffracted back upon itself-but with phase changes across the diffraction grating 714, - with the angles of incidence [theta][iota] and diffraction [theta][tau] equal to one another at what is referred to as the Littrow angle [theta][sum], i.e. 0r = # = [theta][sum], which occurs at a corresponding wave number [sigma] [sigma][sum] (referred to as the Littrow wave number [sigma][sum]) given as follows:

Referring again to FIG. 3a, the periodically-spaced grooves 718 of each of the first 714.1 and second 714.2 diffraction gratings are all oriented substantially parallel to the X axis, so as to provide for the wavefronts of the resulting diffracted plane waves 720.2 to be perpendicular to the Y-Z plane, and for diffraction-related rotations of the associated diffracted plane waves 720.2 to be about the X-axis. In operation, a first portion 712.1 of the collimated beam of light 712 is reflected from the partially reflective surface 706' of the beam splitter 706, towards the first diffraction grating 714.1 along the optic axis 39 of the imaging optics 37 and is diffracted back along the optic axis 39 by the periodically-spaced grooves 718 of the first diffraction grating 714.1, after which the first portion 712.1 of the collimated beam of light 712 propagates through the partially reflective surface 706' of the beam splitter 706, and then propagates to the imaging optics 37 along the optic axis 39 thereof. A second portion 712.2 of the collimated beam of light 712 propagates through the partially reflective surface 706' of the beam splitter 706 towards the second diffraction grating 714.2 along the optic axis 33' of the collimating lens 33, and is diffracted back along the optic axis 33' by the periodically-spaced grooves 718 of the second diffraction grating 714.2, and is then reflected from the partially reflective surface 706' of the beam splitter 706 to the imaging optics 37 along the optic axis 39 thereof. The first 712.1 and second 712.2 portions of the collimated beam of light 712 comprise plane waves 712' that are relatively coherent and interfere with one another when mixed following the respective transmission through or reflection from the partially reflective surface 706' of the beam splitter 706. The reflected ray bl of top-most ray bO follows a shorter path than the corresponding transmitted ray b2, and the reflected ray al of bottom-most ray aO follows a longer path than the corresponding transmitted ray a2, resulting in a phase shift across the associated resulting first 712.1' and second 712.2' plane waves.

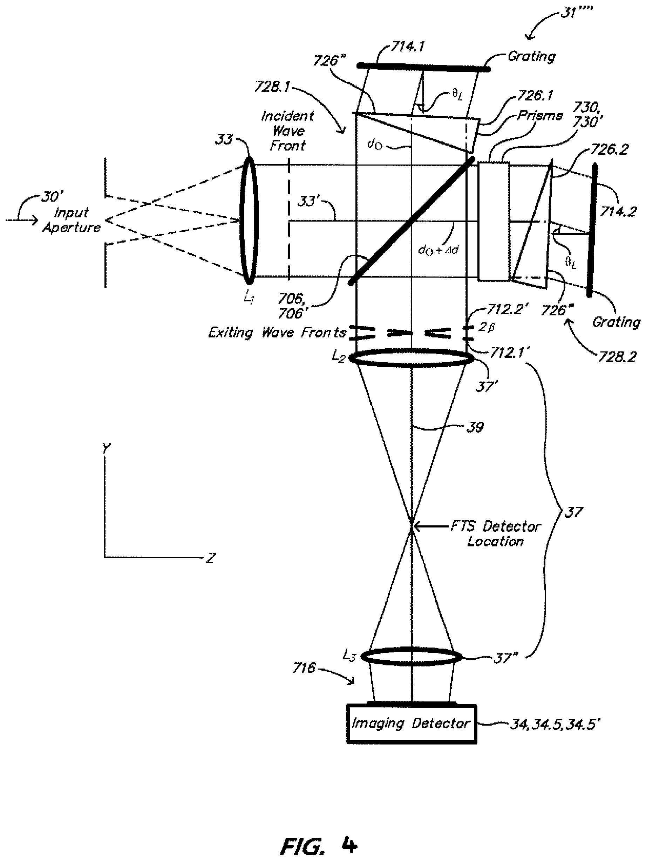

For spectral components of the scattered light signal 30' at the Littrow wave number [sigma], the wavefronts of the resulting corresponding first 712.1' and second 712.2' plane waves will each be oriented substantially normal to the optic axis 39 of the imaging optics 37. However, spectral components of the scattered light signal 30' having different wave number [sigma] will result in corresponding first 712.1' and second 712.2' plane waves that are each diffracted at an angle [beta] relative to the associated corresponding optic axes 33', 39, so that the resulting wavefronts of the associated first 712.1' and second 712.2' plane waves are each at an angle [beta] relative to the normal to the optic axis 39 of the imaging optics 37 and at an angle 2[beta] relative to one another, as indicated in FIG. 3a. The resulting Fizeau fringe pattern 716 is imaged by the imaging optics 37, for example, a pair of first 37' and second 37" relay lenses, onto an imaging detector 34.5' of an associated fifth aspect of a detection system 34, 34.5 - for example, either a CCD detection system 34.1', a camera 34.1", or a two-dimensional array of photodetectors 34.1''' - located at the rear focal plane 37.2 of the imaging optics 37. Referring to FIG. 4, the Spatial Heterodyne Spectrometer (SHS) 31''' illustrated in FIG. 3a may be modified with the addition of first 726.1 and second 726.2 field widening prisms, - for example, each constructed of an optical material, for example, glass or fused quartz- with the first field widening prism 726.1 located between the beam splitter 706 and the first diffraction grating 714.1 in the first arm 728.1 of the Spatial Heterodyne Spectrometer (SHS) 31''', and with the second field widening prism 726.2 located between the beam splitter 706 and the second diffraction grating 714.2 in the second arm 728.2 of the Spatial Heterodyne Spectrometer (SHS) 31''', wherein each of the first 726.1 and second 726.2 field widening prisms is configured so as to provide for refracting the respective first 712.1 and second 712.2 portions of the collimated beam of light 712 at the Litrow angle 0L, thereby providing for the associated first 714.1 and second 714.2 diffraction gratings to each be oriented substantially normal to the corresponding respective optic axes 39, 33'. In one embodiment, the second face 726" of each of the first 726.1 and second 726.2 field widening prisms is oriented substantially parallel to the corresponding associated first 714.1 and second 714.2 diffraction grating. The first 726.1 and second 726.2 field widening prisms provide for maintaining the phase of the associated first 712.1 and second 712.2 portions of the collimated beam of light 712 to be maintained over a substantially larger range of angles than possible without the first 726.1 and second 726.2 field widening prisms, thereby providing for using scattered light signals 30' over a substantially wider range of angles, thereby increasing the throughput and associated signal levels of this "field-widened" Spatial Heterodyne Spectrometer (SHS) 31''' relative to the Spatial Heterodyne Spectrometer (SHS) 31''' as illustrated in FIG. 3a, by correcting for the interference path difference that would otherwise be caused by off axis angles, thereby providing for a relatively large solid angle to be viewed coherently through the Spatial Heterodyne Spectrometer (SHS) 31'''.

Continuing to refer to FIG. 4, in accordance with a fourth aspect, the interferometer 31 comprises a Doppler Asymmetric Spatial Heterodyne Spectrometer 31'''' - also referred to as a DASH Spectrometer 31'''' - which comprises the above- described "field- widened" Spatial Heterodyne Spectrometer (SHS) 31''', but with the first 728.1 and second 728.2 arms of the DASH Spectrometer 31'''' having unequal optical path lengths do and do+Ad.

Furthermore, an additional prism 730 of optical material- for example, constructed of an optical material, for example, glass or fused quartz - may be inserted in the longer arm 728 of the DASH Spectrometer 31 "" between the beam splitter 706 and the associated corresponding first 726.1 or second 726.2 field widening prism, so as to provide for compensating for the longer associated optical path length do+Ad, thereby providing for the correct imaging of the first 714.1 and second 714.2 diffraction gratings on the imaging detector 34.5'. For example, this is illustrated in FIG. 4 with a parallel- faced prism 730' in the second arm 728.2 between the beam splitter 706 and the second field widening prism 726.2. Alternatively, instead of, or in addition to, the separate prism 730 in one of the first 728.1 or second 728.2 arms of the of the DASH Spectrometer 31 "", the associated first 726.1 or second 726.2 field widening prisms could be made with different thicknesses so as to provide a similar optical path length compensation.

The DASH Spectrometer 31 "" can be substituted for the Fabry-Perot interferometer 31' in any of the LIDAR systemswhile maintaining the relationships between the collimating lens 33 and the imaging optics 37 with the remainder of the elements of the LIDAR systems the same as for the Fabry-Perot interferometer 31'. The DASH Spectrometer 31"" is described in the following references, Christoph R. Englert, David D. Babcock, and John M. Harlander 'Doppler asymmetric spatial heterodyne spectroscopy (DASH): concept and experimental demonstration', Applied Optics, 29, 7297-7307, (2007); and US-A-7, 773,229 B2.

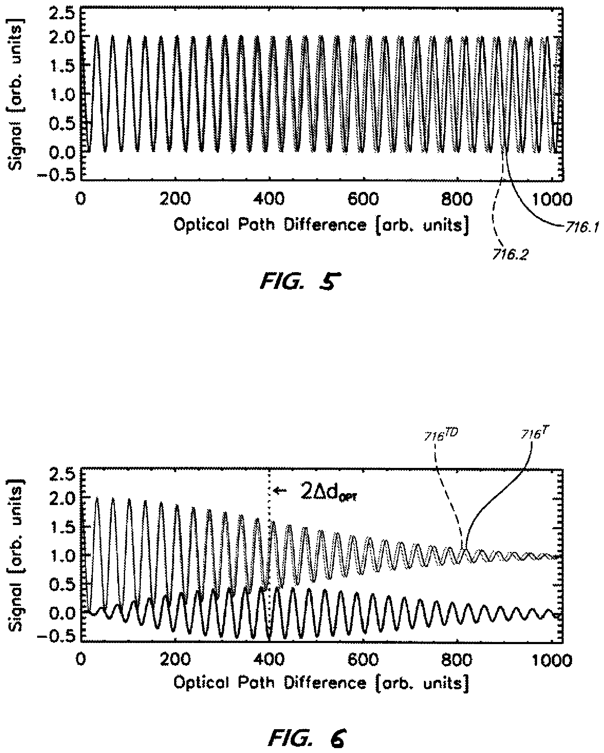

Referring to FIG. 5, there is illustrated an image of Fizeau fringe patterns 716 from either the Spatial Heterodyne Spectrometer (SHS) 31''' or the DASH Spectrometer 31"" for two different scattered light signals 30', one substantially monochromatic, resulting in a corresponding first Fizeau fringe pattern 716.1, and the other slightly Doppler-shifted with respect thereto, as a function of optical path difference [delta] that varies with position across the imaging detector 34.5', for example, along the Z- direction as illustrated in FIGS. 3a and 4, resulting in a corresponding second Fizeau fringe pattern 716.2, illustrating the effect of a phase shift between the two fringe patterns having slightly different frequencies. As described more fully hereinbelow, the Fizeau fringe patterns 716 represent the Fourier transforms of the spectra of the associated scattered light signals 30', wherein light that is nearly monochromatic results in a sinusoidal Fizeau fringe patterns 716.

The optical path length difference Ad in optical path lengths do, do+Ad of the first 728.1 and second 728.2 arms of the DASH Spectrometer 31"" provides for enhancing or optimizing the difference between Doppler-shifted and non-Doppler-shifted Fizeau fringe patterns 716 from the DASH Spectrometer 31"". For example, referring to FIG. 6, the Fizeau fringe pattern 716 for a purely temperature -broadened scattered light signal 30' having a Gaussian spectral line shape is illustrated as a function of optical path difference [delta], as is Fizeau fringe pattern 716(TM) for a slightly Doppler-shifted version thereof.When configured with the correct optical path length difference Ad, the DASH Spectrometer 31"" provides for substantial Doppler-induced shifts in the frequency of the Fizeau fringe pattern 716 that can readily be detected by the imaging detector 34.5'. The intensity I(z) of the Fizeau fringe pattern 716 measured by the imaging detector 34.5', as a function of the osition z on the imaging detector 34.5', is given by a Fourier transform of the corresponding spectral distribution. Referring to FIGS.7a-7c, there is illustrated a Zemax model of an embodiment of the DASH Spectrometer 31"", portions of which are otherwise shown schematically in FIG. 4, and which is configured so as to provide for processing a plurality of separate light signals including at least one scattered light signal 30', possibly in combination with a reference light signal 105, each of which is input to the DASH Spectrometer 31"" from the focal plane 33.1 of the collimating lens 33 from a different position, different positions being separated from one another along a direction parallel to the periodically-spaced grooves 718 of the first 714.1 and second 714.2 diffraction gratings. For example, in the embodiment illustrated in FIGS.7a and 7b, there is illustrated four separate scattered light signals 30.1', 30.2', 30.3', 30.4' and a reference light signal 105, each at different X- locations along the intersection of the focal plane 33.1 of the collimating lens 33 with an X- Z plane through the optic axis 33' of the collimating lens 33. The DASH Spectrometer 31"" incorporates an anamorphic imaging element 734, for example, a bi-convex cylindrical lens 734' located between the imaging optics 37 and the imaging detector 34.5' as illustrated in FIGS. 7a and 7b, or incorporated in the imaging optics 37, that, as illustrated in FIG. 7c, provides for generating - at the imaging detector 34.5' along the X- direction - an image of the scattered light signals 30.1', 30.2', 30.3', 30.4'and the reference light signal 105 in the focal plane 33.1 of the collimating lens 33, without adversely affecting the resulting Fizeau fringe patterns 716', 716", 716''', 716<,v>, 716<v> generated by the DASH Spectrometer 31"" for the scattered light signals 30.1', 30.2', 30.3', 30.4' and the reference light signal 105, respectively, that are imaged by the associated imaging optics 37 onto the imaging detector 34.5'. Accordingly, the anamorphic imaging element 734 provides for collecting and separating the light of the scattered light signals 30.1', 30.2', 30.3', 30.4' and the reference light signal 105 at the imaging detector 34.5', and the imaging optics 37 independently provide for imaging onto the imaging detector 34.5' the fringe patterns 716', 716<u>, 716<m>, 716<iv>, 716<v> generated by the DASH Spectrometer 31"". In the embodiment illustrated in FIGS. 7a and 7b, the bi-convex cylindrical lens 734' having an optic axis aligned with the Y-direction provides for magnifying power in the X-direction without any magnifying power in the Z-direction.

US-A-7,535,572 B2, U.S. Patent Application Publication No. 2009/0231592 A1, and the publication by John M. Harlander, Fred L.Roesler, Christoph R. Englert, Joel Cardon, and Jeff Wimperis, "Spatial Heterodyne Spectroscopy for High Spectral Resolution Space-Based Remote Sensing', Optics & Photonics News, 551,46-51 (2004), each referred to hereinabove, disclose various alternative aspects that can be used to provide for alternative embodiments of either the Spatial Heterodyne Spectrometer (SHS) 31''' or the DASH Spectrometer 31''''. For example, the collimating lens 33 and imaging optics 37 may each be embodied with corresponding reflective elements rather than refractive elements. Furthermore, in accordance with the teachings of US-A-7,535,572 and the above-identified 2004 publication of Harlander et al., either the Spatial Heterodyne Spectrometer (SHS) 31''' or the DASH Spectrometer 31'''' may be embodied in a monolithic element with the associated beam splitter 706, first 726.1 and second 726.2 field widening prisms, prism 730, and first 714.1 and second 714.2 diffraction gratings optically contacted with one another with fused silica spacers instead of being individually fixed in a mechanical structure, and, for example, each constructed of fused silica. Yet further, in accordance with the teachings of U.S. Patent Application Publication No. 2009/0231592 A1, each of the first 714.1 and second 714.2 diffraction gratings may each be replaced with a combination of a dispersing prism and a mirror.

The spectral distribution of the scattered light signal(s) 30' may be determined by inverse Fourier transformation of the measured intensity I(z) from equation (109) of the Fizeau fringe pattern 716 - for example, using a Discrete Inverse Fourier Transform,- and then used to determine the associated atmospheric data 36 in accordance with a methodology similar to that described hereinabove for the Fabry-Perot interferometer 31', wherein the transmission T of the Fabry-Perot interferometer 31' is replaced with the transmission function of either the Spatial Heterodyne Spectrometer (SHS) 31''' or the DASH Spectrometer 31'''' which to a first order is represented by a Fourier transform, which can then be used with the same Levenberg-Marquardt nonlinear least squares method as described hereinabove, using the same broadening functions that account for Doppler, Laser Spectral Width, Scattering, and Turbulent Motion broadening in the inversion of the data from either the Spatial Heterodyne Spectrometer (SHS) 31''' or the DASH Spectrometer 31''''.

Furthermore, the reference light signal 105 when used with either the Spatial Heterodyne Spectrometer (SHS) 31''' or the DASH Spectrometer 31'''' provides for correcting for small perturbations of the associated transmission function model used for signal processing. For example a slight change in the wavelength or frequency of the light source 11 may be accounted for in the data analysis instead of adding to associated measurement uncertainty. Any associated instrument drifts that are either slow when compared to the measurement interval or small enough to be absorbed by the algorithm will be accounted for in the data processing which allows one to accommodate wider tolerances on components while maintaining performance.

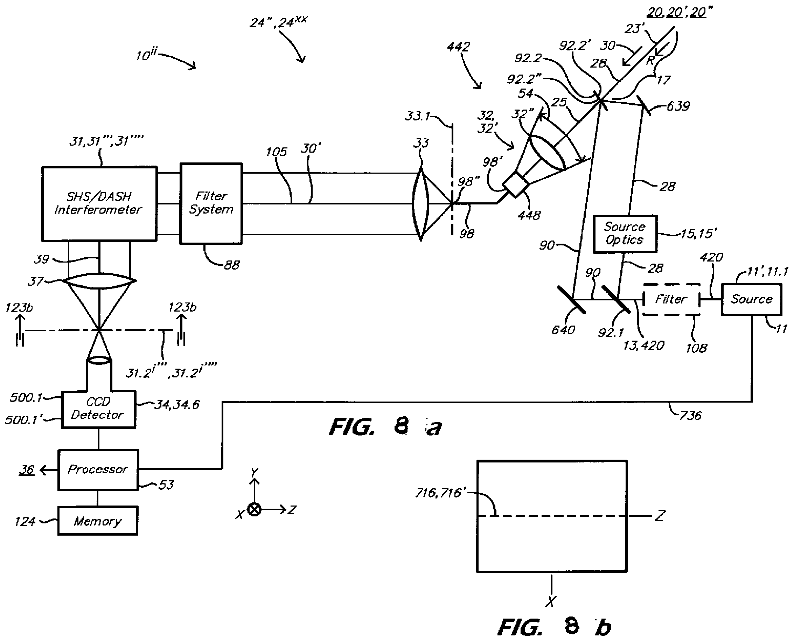

Referring to FIG. 8a, a twentieth aspect of a LIDAR system 24", 24<xx> incorporated in a second aspect of an atmospheric measurement system 10" incorporates a light source 11, for example, a laser 11', that generates a first beam of light 420, of substantially monochromatic light 13, which is split into a reference beam portion 90 and a second beam of light 28 by a first beam splitter optic 92.1. In one embodiment, the second beam of light 28 is shaped by source optics 15, for example, a lens assembly 15' that provides for the width and divergence of the second beam of light 28, and a suitable location of the associated beam waist thereof, so as to provide for illuminating an interaction region 17 within the atmosphere 20 that is detectable by the LIDAR system 24", 24<xx>, wherein the beam width within the interaction region 17 establishes the associated transverse spatial resolution limit of the LIDAR system 24", 24<xx>. In one embodiment, in accordance with a coaxial system 442, the second beam of light 28 is reflected off a first surface mirror 639 and then off a first surface 92.2' of a second beam splitter optic 92.2 and into the atmosphere 20 along a line-of-sight 23' that is coincident with an optic axis 23 of an associated set of receive optics 32, for example, a telescope 32'. The reference beam portion 90 is reflected off a second first surface mirror 640 and then of a second surface 92.2" of the second beam splitter optic 92.2 and into the receive optics 32, for example, along the optic axis 23 thereof.

The light source 11 provides for generating a pulsed first beam of light 420 responsive a control signal 736 from an associated data processor 53. The receive optics 32 provides for receiving the reference beam portion 90 generated substantially simultaneously with the second beam of light 28, and the resulting scattered light 30 within the field-of-view 54 of the receive optics 32 that is scattered by the atmosphere 20 from the interaction region 17 some time after the second beam of light 28 is generated. The telescope 32' comprises a effective lens 32", and both the reference beam portion 90 and the scattered light signal 30' collected thereby is collected by the final light- collecting element 448 thereof into the first end 98' of a fiber optic 98 that directs the returned photons to the collimating lens 33 of an interferometer 31 comprising, for example, either a Spatial Heterodyne Spectrometer (SHS) 31''' or a DASH Spectrometer 31'''', for example, with the second end 98" of the fiber optic 98 located at the focal plane 33.1 of the collimating lens 33. The Spatial Heterodyne Spectrometer (SHS) 31''' or a DASH Spectrometer 31'''' further incorporates a filter system 88- similar to that described hereinabove - between the collimating lens 33 and the beam splitter 706 thereof.

Referring to FIG. 8b, the imaging optics 37 of the Spatial Heterodyne Spectrometer (SHS) 31''' or a DASH Spectrometer 31'''', alone or in combination with an associated anamorphic imaging element 734 such as a bi-convex cylindrical lens 734', is configured to compress the associated resulting Fizeau fringe pattern 716 generated by the Spatial Heterodyne Spectrometer (SHS) 31"' or a DASH Spectrometer 31'''' in the X-direction indicated FIG. 8b, so as to form the Fizeau fringe pattern line 716' along the Z-direction, in the imaging plane 31.2' 31.2' of the Spatial Heterodyne Spectrometer (SHS) 31"' or the DASH Spectrometer 31'''', respectively, which is then projected onto a sixth aspect of a detection system 34, 34.6 comprising either the fast CCD detector 500.1 or a second embodiment of the CCD detector 500.1' comprising an imaging region 608 and a masked, frame-transfer region 610, as described hereinabove in the context of FIGS. 89-93, so as to provide for initially recording the Fizeau fringe pattern 716 associated with the reference light signal 105 associated with the reference beam portion 90 and then continuing to record over time a range-dependent Fizeau fringe pattern 716 associated with the scattered light signal 30' with a monotonically increasing one-to-one relationship between time at which a particular Fizeau fringe pattern 716 is recorded by the CCD detector 500.1, 500.1' an the corresponding range R from which the associated scattered light 30 originated within the interaction region 17 along the second beam of light 28.

In operation, the light source 11 first generates a pulsed first beam of light 420, wherein the associated pulse width is substantially less than the time required for the second beam of light 28 to be generated and for scattered light 30' generated therefrom to reach the second beam splitter optic 92.2 from the closest measurement volume 52.1 along the associated interaction region 17. The first light received by the receive optics 32 is from the reference beam portion 90 reflected from the second beam splitter optic 92.2, and is processed by the Spatial Heterodyne Spectrometer (SHS) 31"' or a DASH Spectrometer 31'''' to generate a corresponding Fizeau fringe pattern 716 that is first recorded by the CCD detector 500.1, 500.1'. Thereafter, the receive optics 32 receives scattered light 30 over time from increasingly greater ranges R within the interaction region 17, and the resulting scattered light signals 30' are processed by the Spatial Heterodyne Spectrometer (SHS) 31"' or a DASH Spectrometer 31'''' to generate a corresponding Fizeau fringe pattern 716 over time that is then recorded over time by the CCD detector 500.1, 500.1'. Thereafter, the data processor 53 processes the recorded Fizeau fringe patterns 716, using the initially recorded Fizeau fringe pattern 716 as being representative of the reference light signal 105 when processing the remaining recorded Fizeau fringe patterns 716 in order to determine corresponding range-dependent atmospheric data 36. Accordingly, the twentieth aspect of the LIDAR system 24", 24<xx> provides for the reference 105 and scattered 30' light signals to be time - multiplexed over a common optical processing channel.

In an alternative embodiment, the LIDAR system 24", 24<xx> may be configured to provide for measuring light from an interaction region 17 comprising a single measurement volume 52 by eliminating the first first surface mirror 639, and instead projecting the second beam of light 28 directly into the atmosphere 20 into the interaction region 17 defined by the intersection of the second beam of light 28 with the field-of-view 54 of the receive optics 32, however, while continuing to time -multiplex the processing of the reference 105 and scattered 30' light signals. Further to this alternative embodiment, in accordance with a second alternative embodiment, the need for the second beam splitter optic 92.2 could be eliminated by instead reflecting the reference beam portion 90 from a side of the receive optics 32 facing the final light-collecting element 448, so as to use the receive optics 32 also as an inherent beam splitter.

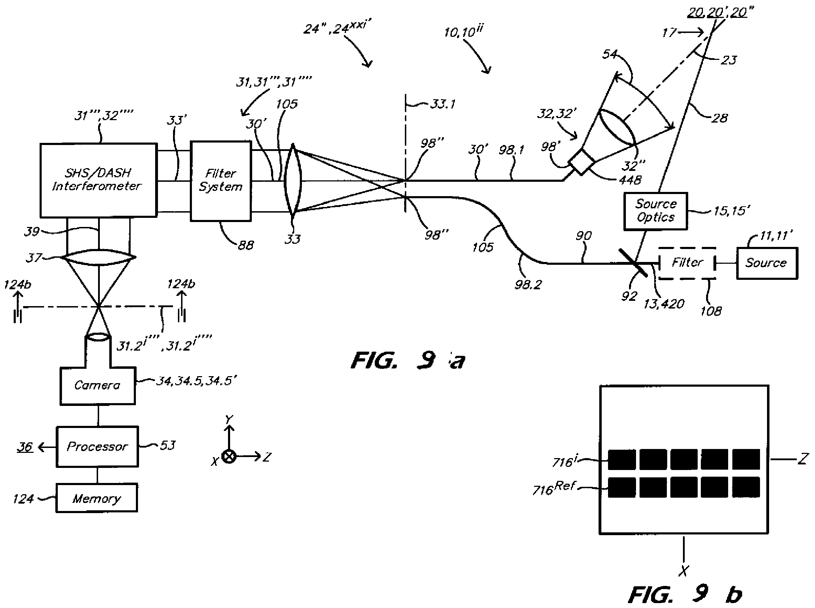

Referring to FIG. 9a, there is illustrated a LIDAR System 24", 24<XXI> incorporated in a second aspect of an atmospheric measurement system 10", incorporating either a Spatial Heterodyne Spectrometer (SHS) 31"' or a DASH Spectrometer 31'''' as the interferometer 31 instead of a Fabry-Perot interferometer 31' and associated circle-to- line interferometer optics 468, wherein the Spatial Heterodyne Spectrometer (SHS) 31"' or a DASH Spectrometer 31'''' further incorporates a filter system 88 - similar to that described hereinabove - between the collimating lens 33 and the beam splitter 706 thereof.

More particularly, the receive optics 32 of the LIDAR System 24", 24<XX1> provides for receiving scattered light 30 that is scattered by the atmosphere 20 from a corresponding interaction region 17 therein defined by the intersection of an associated second beam of light 28 with an associated field-of-view 54 of a corresponding telescope 32'. A reference light signal 105 from a reference beam portion 90 is directed by an associated first fiber optic 98.1 to the focal plane 33.1 of the collimating lens 33, and a scattered light signal 30' captured by a final light-collecting element 448 of the telescope 32' is directed by an associated second fiber optic 98.2 also to the focal plane 33.1 of the collimating lens 33 but at a separate location, for example, as illustrated in FIG. 7b and described hereinabove. Referring to FIG. 9b, thereafter the Spatial Heterodyne Spectrometer (SHS) 31"' or a DASH Spectrometer 31'''' provides for generating corresponding Fizeau fringe patterns 716', 716<Ref> associated with the scattered light signal 30' and reference light signal 105, that are detected by the associated imaging detector 34.5' of an associated fifth aspect of a detection system 34, 34.5 - for example, either a CCD detection system 34.1', a camera 34.1", or a two-dimensional array of photodetectors 34.1"' - located at the rear focal plane 37.2 of the imaging optics 37, from which the atmospheric data 36 associated with the interaction region 17 is determined by the data processor 53 as described hereinabove.

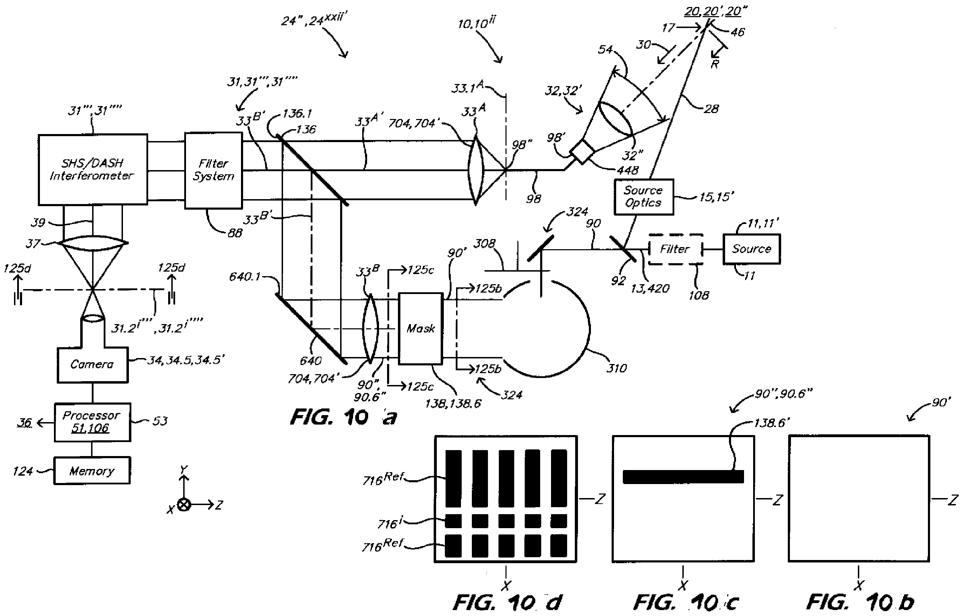

Referring to FIG. 10a, there is illustrated a LIDAR System 24", 24<xx>" incorporated in an atmospheric measurement system 10", incorporating either a Spatial Heterodyne Spectrometer (SHS) 31"' or a DASH Spectrometer 31'''' as the interferometer 31 instead of a Fabry-Perot interferometer 31', wherein the Spatial Heterodyne Spectrometer (SHS) 31''' or a DASH Spectrometer 31'''' further incorporates a filter system 88 - similar to that described hereinabove - between the collimating lens 33 and the beam splitter 706 thereof.

More particularly, the receive optics 32 of the LIDAR System 24", 24<xx>" provides for receiving scattered light 30 that is scattered by the atmosphere 20 from a corresponding interaction region 17 therein defined by the intersection of an associated second beam of light 28 with an associated field-of-view 54 of a corresponding telescope 32'. A scattered light signal 30' captured by a final light-collecting element 448 of the telescope 32' is directed by an associated second fiber optic 98.2 also to the front focal plane 33.1<A> of a first collimating lens 33<A> and then transmitted through the second beam splitter optic 136 and then the associated filter system 88, and processed by the Spatial Heterodyne Spectrometer (SHS) 31''' or a DASH Spectrometer 31'''' so as to generate a corresponding Fizeau fringe pattern 716' as described hereinabove. In parallel with this, a reference illuminator 324 generates a uniform and diffuse reference beam 90' - for example, as illustrated in FIG. 10b - and that is directed through a mask 138, 138.6 illustrated in FIG. 10c that blocks a portion of the uniform and diffuse reference beam 90' from transmission therethrough in an associated opaque rectangular region 138.6' corresponding in size and location to the image of the scattered light signal 30' at the in the imaging plane 31.2' 31.2' of the Spatial Heterodyne Spectrometer (SHS) 31''' or the DASH Spectrometer 31'''', respectively, so as to generated a corresponding masked reference beam 90", 90.6" that is collimated by a second collimating lens 33<B> and is then reflected off a first surface 640.1 of a first surface mirror 640 onto a partially reflective surface 136.1 of the second beam splitter optic 136, and then transmitted through the associated filter system 88, and processed by the Spatial Heterodyne Spectrometer (SHS) 31''' or a DASH Spectrometer 31'''' so as to generate a corresponding reference Fizeau fringe pattern 716<Ref> as described hereinabove. Referring to FIG. 10d, the Fizeau fringe patterns 716', 716<Ref> from scattered light signal 30' and the masked reference beam 90", 90.6", respectively, are mutually exclusive in the imaging plane 31.2' 31.2' as a result of the mask 138, 138.6, and accordingly are separately detected by the associated imaging detector 34.5' of an associated fifth aspect of a detection system 34, 34.5- for example, either a CCD detection system 34.1', a camera 34.1", or a two-dimensional array of photodetectors 34.1''' - located at the rear focal plane 37.2 of the imaging optics 37, from which the atmospheric data 36 associated with the interaction region 17 is determined by the data processor 53 as described hereinabove.

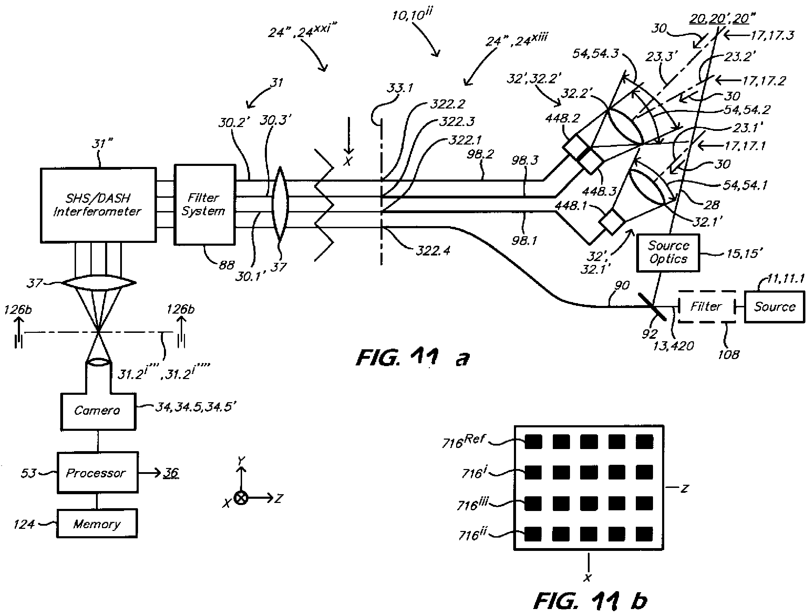

Referring to FIG. 11a, there is illustrated an embodiment of a LIDAR System 24", 24<XXI> incorporated in an atmospheric measurement system 10", incorporating either a Spatial Heterodyne Spectrometer (SHS) 31''' or a DASH Spectrometer 31'''' as the interferometer 31 instead of a Fabry-Perot interferometer 31', wherein the Spatial Heterodyne Spectrometer (SHS) 31''' or a DASH Spectrometer 31'''' further incorporates a filter system 88 - similar to that described hereinabove - between the collimating lens 33 and the beam splitter 706 thereof. This a LIDAR System 24", 24<XXI> is also similar to the LIDAR System 24", 24<XX1> illustrated in FIG. 9a, except for incorporating a plurality of telescopes 32.1', 32.2' and 32.3' that provide for receiving scattered light 30 from a plurality of different interaction regions 17, 17.1, 17.2, 17.3, wherein the separate corresponding resulting scattered light signals 30.1', 30.2', 30.3' input to the Spatial Heterodyne Spectrometer (SHS) 31''' or a DASH Spectrometer 31'''' at separate locations as illustrated in FIG. 7b, and separately simultaneously processed together with the associated reference light signal 105 to generate a plurality of corresponding Fizeau fringe patterns 716', 716", 716''', 716<Ref>, as illustrated in FIG. 11d, from which the atmospheric data 36 associated with each corresponding interaction region 17, 17.1, 17.2, 17.3 is determined by the data processor 53 from the corresponding Fizeau fringe patterns 716', 716", 716''' together with the reference Fizeau fringe pattern 716<Ref> associated with the reference light signal 105, as described hereinabove.

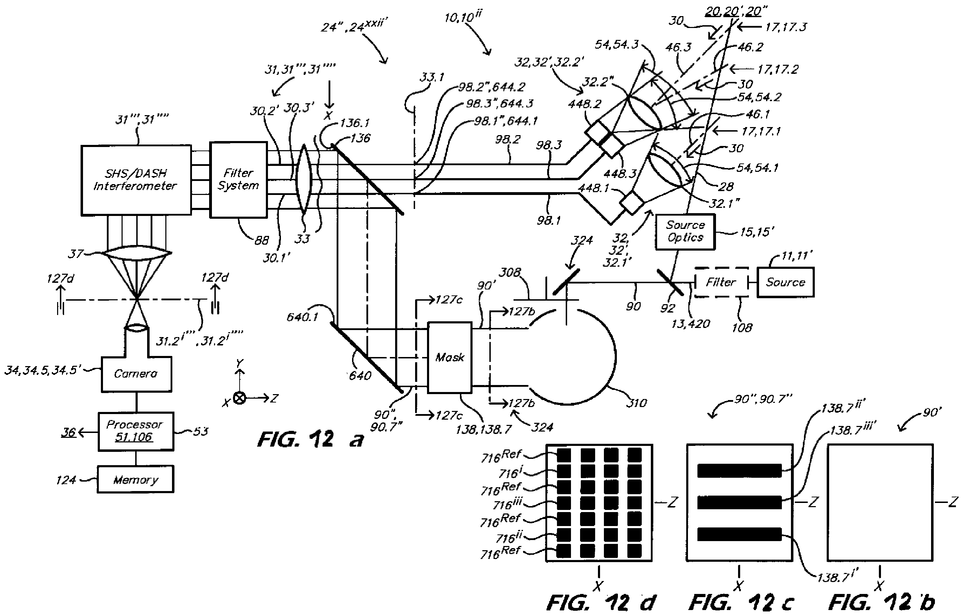

Similarly, referring to FIG. 12a, there is illustrated a LIDAR System 24", 24<xx>" incorporated in an atmospheric measurement system 10", incorporating either a Spatial Heterodyne Spectrometer (SHS) 31''' or a DASH Spectrometer 31'''' as the interferometer 31 instead of a Fabry-Perot interferometer 31', wherein the Spatial Heterodyne Spectrometer (SHS) 31''' or a DASH Spectrometer 31'''' further incorporates a filter system 88 - similar to that described hereinabove - between the collimating lens 33 and the beam splitter 706 thereof. The LIDAR System 24", 24<xx>" is also similar to the LIDAR System 24", 24 illustrated in FIG. 10a, except for incorporating a plurality of telescopes 32.1', 32.2' and 32.3' that provide for receiving scattered light 30 from a plurality of different interaction regions 17, 17.1, 17.2, 17.3, wherein the corresponding mask 138, 138.7 illustrated in FIG. 12c incorporates a plurality of opaque rectangular regions 138.7' , 138.7''', 138.7'''' corresponding in size and location to the separate images of the associated scattered light signals 30.1', 30.2', 30.3' at the in the imaging plane 31.2' 31.2' of the Spatial Heterodyne Spectrometer (SHS) 31''' or the DASH Spectrometer 31'''', respectively, so as to generated the corresponding masked reference beam 90", 90.7", wherein the scattered light signals 30.1', 30.2', 30.3' and the masked reference beam 90", 90.7" are both collimated by a common collimating lens 33. The separate corresponding resulting scattered light signals 30.1', 30.2', 30.3' input to the Spatial Heterodyne Spectrometer (SHS) 31''' or a DASH Spectrometer 31'''' at separate locations as illustrated in FIG. 7b, and separately simultaneously processed together with the associated masked reference beam 90",
90.7" so as to generate a plurality of corresponding
Fizeau fringe patterns 716', 716", 716''', 716<Ref> as
illustrated in FIG. 12d, from which the atmospheric data
36 associated with each corresponding interaction region
17, 17.1, 17.2, 17.3 is determined by the data processor
53 from the corresponding Fizeau fringe patterns 716',
716", 716''' together with the reference Fizeau fringe pattern 716<Ref> associated with the reference light signal
105, as described hereinabove.

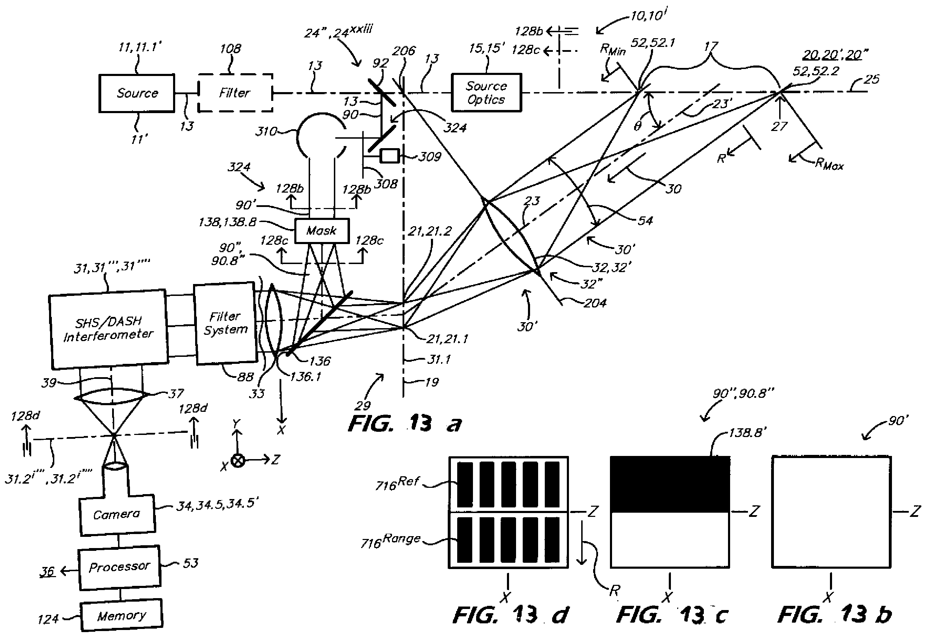

Referring to FIG. 13a, there is illustrated a
range-imaging LIDAR System 24',
24<XX1>" incorporated in a measurement system 10',
which incorporates either a Spatial Heterodyne Spectrometer (SHS) 31''' or a DASH Spectrometer 31'''' as
the interferometer 31 instead of a Fabry-Perot interferometer 31', wherein the Spatial Heterodyne Spectrometer (SHS) 31''' or a DASH Spectrometer 31'''' further incorporates a filter system 88 - similar to that described
hereinabove - between the collimating lens 33 and the
beam splitter 706 thereof.

More particularly, the plane containing the respective optic axes 23, 25 of the receive optics 32 and
the associated beam of light 28, respectively, is optically
oriented substantially parallel to the X-axis of the Spatial
Heterodyne Spectrometer (SHS) 31''' or a DASH Spectrometer 31'''' as illustrated in FIGS. 118a, 119 and 122a-
c, so as to provide for a range-dependent Fizeau fringe
pattern 7l6<Ran e> for which different portions of the
scattered light signal 30' in the intermediate image 29
associated with different ranges R are transformed into
corresponding different portions of the resulting range-
dependent Fizeau fringe pattern 7l6<Ran e> by the Spatial Heterodyne Spectrometer (SHS) 31''' or a DASH
Spectrometer 31'''', so that each separate portion of the
resulting range-dependent Fizeau fringe pattern
7i6<Ran e> contains information about an associated
corresponding measurement volume 52 in the atmosphere 20 at a corresponding range R from the range-
imaging LIDAR System 24', 24<XX1>". The extent of the
intermediate image 29 of the scattered light signal 30'
along the X-direction thereof is scaled to use a portion
of the corresponding extent of the Spatial Heterodyne
Spectrometer (SHS) 31''' or a DASH Spectrometer 31'''',
and the associated imaging detector 34.5' of an associated fifth aspect of a detection system 34, 34.5, and the
remaining portion thereof is used to process a corresponding masked reference beam 90", 90.8", as illustrated in FIG. 13c, generated using a corresponding associated mask 138,138.8 having an opaque rectangular region 138.8' corresponding in size and location to the image of the scattered light signal 30' at the imaging plane
31.2' 31.2' of the Spatial Heterodyne Spectrometer
(SHS) 31''' or the DASH Spectrometer 31'''', so as to provide for generating a range-dependent Fizeau fringe pattern 7l6<Ran e> at the imaging plane 31.2' 31.2' of the
Spatial Heterodyne Spectrometer (SHS) 31''' or the
DASH Spectrometer 31'''' at locations where the mask 138, 138.8 is active, and so as to provide for generating
a reference Fizeau fringe pattern 716 at the imaging
plane 31.2 31.2 of the Spatial Heterodyne Spectrometer
(SHS) 31''' or the DASH Spectrometer 31'''' elsewhere,
i.e. at locations where the mask 138,138.8 is inactive, as
illustrated in FIG. 13d. The data processor 53 then uses
a particular Z-directed slice of the range- dependent
Fizeau fringe pattern 7l6<Ran e> at a particular X-location, together with the reference Fizeau fringe pattern
716<Ref>, to determine the atmospheric data 36 associated with a corresponding measurement volume 52 at
a corresponding range R within the interaction region 17
in accordance with the process as described hereinabove.

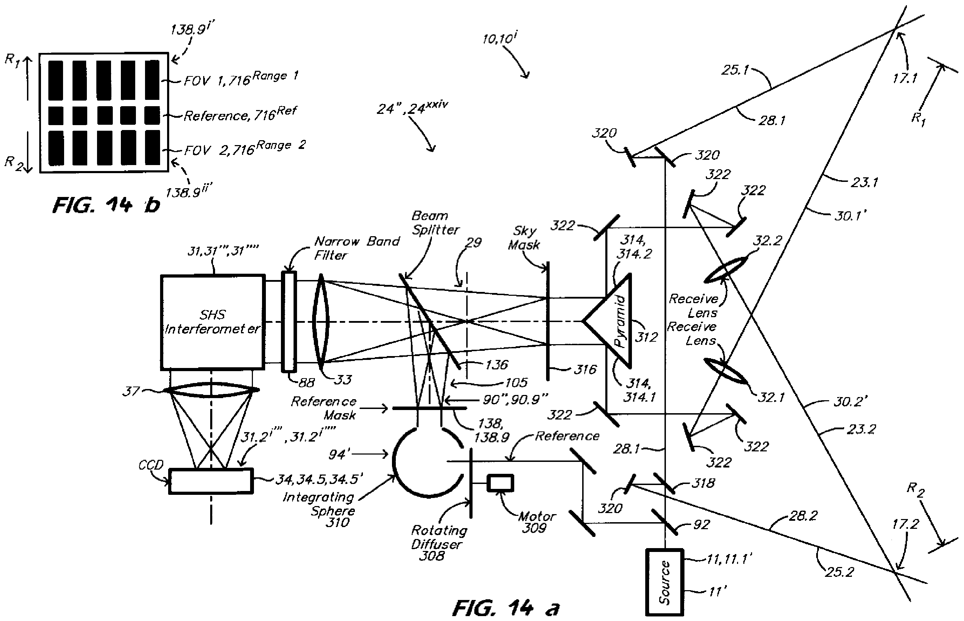

Referring to FIG. 14a, there is illustrated a twenty-forth aspect of a range- imaging LIDAR System 24',
24<xx,v> incorporated in an atmospheric measurement
system 10'r, incorporating either a Spatial Heterodyne
Spectrometer (SHS) 31''' or a DASH Spectrometer 31'''''
as the interferometer 31 instead of a Fabry-Perot interferometer 31', wherein the Spatial Heterodyne Spectrometer (SHS) 31''' or a DASH Spectrometer 31'''' further incorporates a filter system 88 - similar to that described hereinabove - between the collimating lens 33
and the beam splitter 706 thereof.

More particularly, the plane containing the respective first optic axes 23.1, 25.1 of the first set of receive
optics 32 and the associated first beam of light 28.1, respectively, and the plane containing the respective second optic axes 23.1, 25.1 of the second set of receive
optics 32.2 and the associated second beam of light 28.2,
respectively, are each optically oriented substantially
parallel to the X-axis of the Spatial Heterodyne Spectrometer (SHS) 31''' or a DASH Spectrometer 31'''' as
illustrated in FIGS. 3a, 4 and 7a-7c for which different
portions of the scattered light signals 30.1', 30.2' in the
intermediate image 29 associated with different ranges
R are transformed into corresponding different portions
of the resulting range-dependent Fizeau fringe patterns
716 by the Spatial Heterodyne Spectrometer (SHS) 31'''
or a DASH Spectrometer 31'''', so that each separate
portion of the resulting range-dependent Fizeau fringe
patterns 716<Ran el>, 7l6<Ran e2> contains information
about associated corresponding measurement volumes
52 in the atmosphere 20 within the associated corresponding interaction regions 17.1,17.2 at a corresponding ranges R from the range- imaging LIDAR System 24',
24<xx,v>. The extent of the intermediate image 29 of the
scattered light signals 30.1', 30.2' along the X-direction
thereof is scaled to use a portion of the corresponding
extent of the Spatial Heterodyne Spectrometer (SHS)
31''' or a DASH Spectrometer 31'''', and the associated
imaging detector 34.5' of an associated fifth aspect of a
detection system 34, 34.5, and the remaining portion
thereof is used to process a corresponding masked reference beam 90", 90.9" generated using a corresponding
associated mask 138, 138.9 having a plurality of opaque
rectangular regions 138.9' , 139" corresponding in size and location to the image of the scattered light signal 30' at the imaging plane 31.2' 31.2' of the Spatial Heterodyne Spectrometer (SHS) 31''' or the DASH Spectrometer 31'''', so as to provide for generating range- dependent Fizeau fringe patterns 716<Ran el>, 716<Ran e2> at the imaging plane 31.2'''' 31.2''''' of the Spatial Heterodyne Spectrometer (SHS) 31''' or the DASH Spectrometer 31'''' at locations where the mask 138, 138.8 is active, and so as to provide for generating a reference Fizeau fringe pattern 716 at the imaging plane 31.2 31.2 of the Spatial Heterodyne Spectrometer (SHS) 31''' or the DASH Spectrometer 31'''' elsewhere, i.e. at locations where the mask 138,138.8 is inactive, as illustrated in FIG. 14b. The data processor 53 then uses a particular Z-directed slice of the range-dependent Fizeau fringe patterns 716<Ran el>, 7l6<Ran e2> at a particular X-locations, together with the reference Fizeau fringe pattern 716<Ref>, to determine the atmospheric data 36 associated with corresponding measurement volumes 52 at a corresponding ranges R within the associated interaction regions 17.1, 17.2 in accordance with the process as described hereinabove.

Furthermore, as an alternative to the third aspect of the detection system 34.3, the associated digital micromirror device (DMD) 142 can be replaced with corresponding plurality fixed optical masks that provide for either transmitting or reflecting in accordance with the same patterns 190 described hereinabove in respect of pixel mirror rotational states 148, 150, 152. For example, each corresponding complementary signal 156, 158 detectable by one of the photodetectors 154<A>, 154<B> for a given pattern 190 of pixel mirror rotational states 148, 150, 152 could alternatively be detected by a corresponding fixed optical mask in the position of the micromirrors 144 of the digital micromirror device (DMD) 142 in cooperation with a corresponding photodetector 154 that provides for detecting a either a transmitted or reflected corresponding complementary signal 156, 158, wherein two fixed masks would be used to provide for detecting both complementary signals 156, 158 associated with a given pattern. The various fixed optical masks would be moved into position one at a time for each measurement, for example, by linear or circular motion responsive to either a linear or rotary positioner, for example, by adapting either a mechanical translation stage or a filter wheel accordingly, with individual filters of the filter wheel replaced with the fixed optical masks, each corresponding to a different portion of the associated pattern 190. In another embodiment, in cooperation with fixed optical transmission masks in which the associated transmitted light is detected, a different photodetector 154 could be used for each of the reference 456 and signal 458 channels in cooperation with corresponding portions of the associated fixed optical masks so as to provide for reducing the total number of fixed optical masks and so as to provide for increasing the associated data processing throughput.

Generally, each LIDAR system 24 can provide for measuring atmospheric data 36 within a limited measurement volume 52 and with limited precision. The overall effective volume of the atmosphere 20 being measured may be increased by using a combination of a plurality of LIDAR systems 24 having corresponding distinct measurement volume 52 that are either overlapping or relatively proximal to in relation to one another. The precision of the measurement of the atmospheric data 36 within a given measurement volume 52 may be increased by increasing the duration over which the associated scattered light 30 is received and processed. The particular characteristic of a particular LIDAR system 24 may be adapted to the particular application of the associated atmospheric data 36, and measurements from different LIDAR systems 24 having differing characteristics may be combined so as to provide for atmospheric data 36 that is most useful for a particular application. For example, a LIDAR system 24 operating at a relatively short range relative to an associated wind turbine 14, and a relatively faster data sampling rate, may be appropriate for immediately controlling the wind turbine 14, for example, so as to provide for optimizing the capture of wind energy wile limiting fatigue and/or extreme loads; whereas a LIDAR system 24 operating at a relatively longer range and a relatively slower data sampling rate, may be appropriate for anticipating future wind conditions to provide for either controlling an associated power grid 56 to which the generator 82 of the wind turbine 14 is connected, or for controlling the wind turbine 14 responsive to anticipated demand from the associated power grid 56. Similarly, short and long range versions of associated LIDAR systems 24 can be used in combination to provide for wind farm site assessment or on operational wind farms, for example, to optimize coverage and measurement accuracy while minimizing cost.

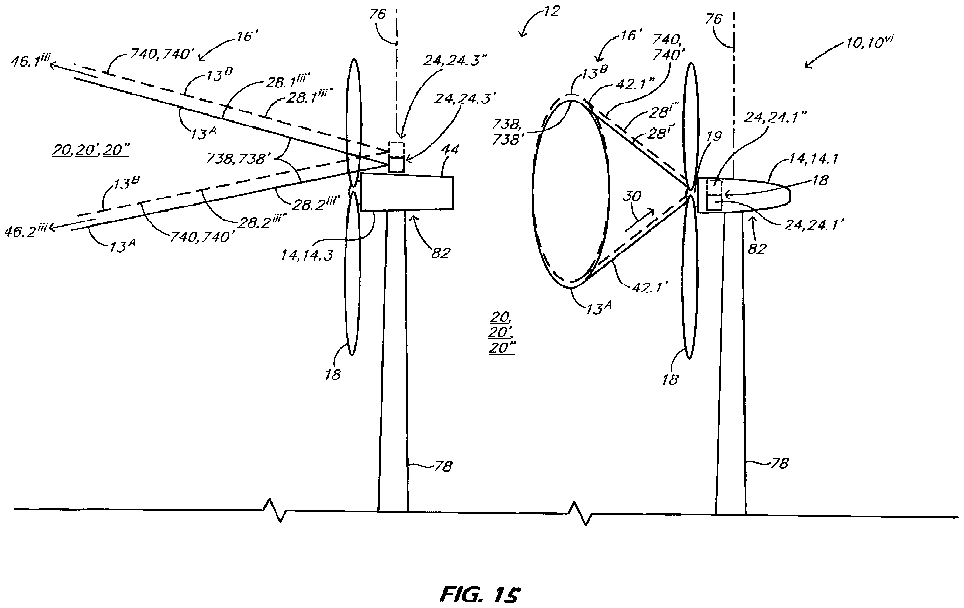

Furthermore, referring to FIGS. 15-17, different LIDAR systems 24, each operating at a different wavelength, may be used in combination to sense either a common measurement volume 52, overlapping measurement volumes 52, or proximal measurement volumes 52, so as to provide for improved reliability through redundancy, for example, with respect to either all or a subset of associated atmospheric data 36, or so as to provide for either improved reliability or an extended operating lifetime by preferably operating at an infrared or visible wavelength if measurements responsive to aerosol scattering are possible and sufficient.

For example, referring to FIG. 15, first 14.1 and third 14.3 wind turbines of the wind farm 12 illustrated in FIG. 2 in accordance with a sixth aspect of an atmospheric measurement system 10<V1> each cooperate with a pair of associated first LIDAR systems 24.1', 24.1" or third LIDAR systems 24.3', 24.3", respectively. For example, a first 24.1' of the pair of first LIDAR systems 24.1', 24.1" is configured to operate at a nominal first wavelength 738, for example, an infrared wavelength 738' or a visible wavelength 738", that provides for primarily only scattering from aerosols 20" in the atmosphere 20, for example, with not more than negligible scattering from molecules 20' in the atmosphere 20, whereas a second 24.1" of the pair of first LIDAR systems 24.1', 24.1" is configured to operate at a nominal second wavelength 740, for example, an ultraviolet wavelength 740', that provides for scattering both from aerosols 20" and molecules 20' in the atmosphere 20.

As one example, each of the first LIDAR systems 24.1', 24.1" emits a corresponding beam of light 28' , 28' that emanates from a central region of the rotor 18 of the associated wind turbine 14.1 - for example, from the hub 19 thereof- and that rotates therewith so that the respective associated beams of light 28' , 28' sweep out corresponding conical surfaces of revolution 42.1', 42.1", wherein the associated conical surfaces of revolution 42.1', 42.1' are aligned with the rotor 18, wherein the associated beams of light 28' , 28' are at least relatively proximate to one another and possibly at least partially overlapping one another. Each of the first LIDAR systems 24.1', 24.1" receives corresponding scattered light 30 from associated one or more measurement volumes 52 within an interaction region 17 along the corresponding beam of light 28', 28'.

As another example, each of the third LIDAR systems 24.3', 24.3" is relatively fixed to the nacelle 44 of the third wind turbine 14.3 so as to emit corresponding a first pair of relatively fixed beams of light 28.1''', 28.1''' in a first direction 46.1''', and so as to emit a second pair of relatively fixed beams of light 28.2''', 28.2''' in a second direction 46.2''', wherein the beams of light 28.1<m>', 28.1<m>", 28.2<m>', 28.2<m>" along the associated directions 46.1''', 46.2''' turn with the nacelle 44 as the direction 48''' of the nacelle 44 is changed to accommodate changes in the local direction 50 of the wind 16 as illustrated in FIG. 2, wherein the associated first pair of relatively fixed beams of light 28.1''', 28.1''' are at least relatively proximate to one another and possibly at least overlapping one another, and the associated second pair of relatively fixed beams of light 28.2''', 28.2''' are at least relatively proximate to one another and possibly at least partially overlapping one another. Each of the third LIDAR systems 24.3', 24.3" receives corresponding scattered light 30 from associated measurement volumes 52 associated interaction regions 17 along the corresponding beams of light 28.1<m>', 28.1<m>", 28.2<m>', 28.2<m>".

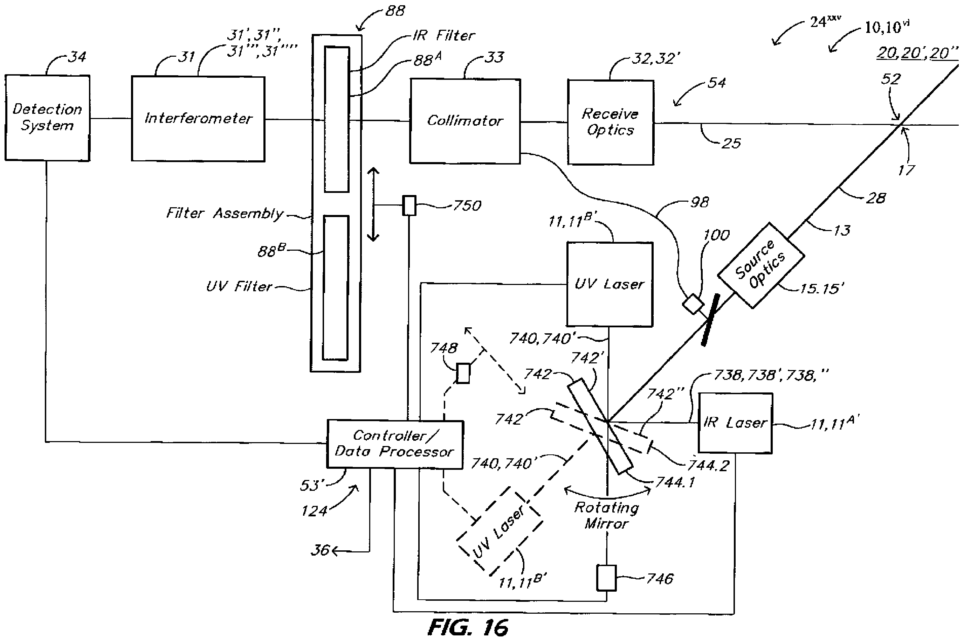

Referring to FIG. 16, there is illustrated a twenty-fifth aspect of a LIDAR System 24', 24", 24<xxv> in accordance with an embodiment of the sixth aspect of the atmospheric measurement system 10<V1>, incorporating a light source 11 comprising first 11<A> and second 11<B> lasers selectively operated under control of a controller/data processor 53' so that at most only one of the first 11<A> and second 11<B> lasers is operated at any given time in cooperation with a common set of source optics 15, for example, a lens assembly 15', so as to provide for generating and projecting into the atmosphere 20 a common beam of light 28 containing substantially monochromatic light 13 from one of the first 11<A> and second 11 <B> lasers.

For example, in one embodiment, in a first mode of operation, substantially monochromatic light 13<A> at a nominal first wavelength 738 from the first laser 11 <A> operated under control of the controller/data processor 53' is reflected by a first surface 742' of a mirror 742 in a first rotational position 744.1 so as to form the beam of light 28 that is then projected through the source optics 15 and into the atmosphere 20 along an associated optic axis 23; and in a second mode of operation, substantially monochromatic light 13<B> at a nominal second wavelength 740 from the second laser 11<B> operated under control of the controller/data processor 53' is reflected by a second surface 742" of the mirror 742 in a second rotational position 744.2 so as to form the beam of light 28 that is then projected through the source optics 15 and into the atmosphere 20 along the associated optic axis 23, wherein the rotational position 744.1, 744.2 of the mirror 742 is controlled in synchronism with the operation of the first 11<A> and second 11 <B> lasers by an associated angular positioner 746 under control of the controller/data processor 53'. In one embodiment, the first 742' and second 742" surfaces of the mirror 742 are one and the same surface of the mirror 742 and possibly one and the same; whereas for another embodiment, the first 742' and second 742" surfaces of the mirror 742 are different, for example, on opposite sides of the mirror 742, for example, implemented with coatings that are tuned to the particular wavelength 738, 740 being reflected.

As another example, in a second embodiment, the mirror 742 is oriented in a substantially fixed angular position and adapted to be translated transversely relative to the optic axis 23 of the beam of light 28 so that in a first position under the first mode of operation, substantially monochromatic light 13<A> at a nominal first wavelength 738 from the first laser 11 <A>' operated under control of the controller/data processor 53' is reflected by the first surface 742' of the mirror 742 in the first rotational position 744.1 so as to form the beam of light 28 that is then projected through the source optics 15 and into the atmosphere 20 along an associated optic axis 23. However, in the second mode of operation, the mirror 742 is translated by an associated linear positioner 748 under control of the controller/data processor 53' so as to provide for the substantially monochromatic light 13<B> at the nominal second wavelength 740 from the second laser 11 <B>' operated under control of the controller/data processor 53' to be transmitted directly to the source optics 15 without first interacting with the mirror 742.

The substantially monochromatic light 13 of the beam of light 28 projected into the atmosphere 20 is scattered by the aerosols 20" or molecules 20' of the atmosphere 20, and the resulting scattered light 30 from a particular interaction region 17 and associated one or more measurement volumes 52 is received by associated receive optics 32, for example, an associated telescope 32', along an associated optic axis 25, wherein the extent of the associated interaction region 17 is defined by the intersection of an associated field-of-view 54 of the receive optics 32 with the corresponding beam of light 28. The resulting scattered light signal 30' captured by the associated receive optics 32 is collimated by an associated collimating lens 33, filtered by an associated filter system 88 and processed by an associated interferometer 31 so as to generate an associated interference pattern, i.e. a scatter fringe pattern 47, that is detected by an associated detection system 34. The filter system 88 comprises a pair of first 88<A> and second 88<B> bandpass filters, for example, that are mechanically-selectable by action of an associated actuator 750 under control of the controller/data processor 53' so as to provide filtering the scattered light signal 30' with the first bandpass filter 88<A> in synchronism with the use of the first laser 11<A>' to generate the beam of light 28, and so as to provide filtering the scattered light signal 30' with the second bandpass filter 88<B> in synchronism with the use of the second laser 11 <B>' to generate the beam of light 28. The signal from the detection system 34 is processed by the controller/data processor 53' so as to determine the atmospheric data 36 associated with the corresponding scattered light signal 30' representative of the state of the atmosphere 20 within the associated measurement volume 52. The interferometer 31 and associated detection system may be configured and operated in accordance with any of the above- described embodiments. A portion of the substantially monochromatic light 13 may be extracted from the beam of light 28 with an associated beam splitter optic 92 so as to provide for a reference beam portion 90 that can be processed by the interferometer 31 and detection system 34 simultaneously together with the scatter fringe pattern 47 so as to provide for compensating for associated defects in the interferometer 31 when determining the corresponding atmospheric data 36.

When operated in the first mode of operation, the above-described LIDAR systems 24.1', 24.3', 24<xxv> in accordance with the sixth aspect of the atmospheric measurement system 10<VI> provide for projecting substantially monochromatic light 13<A> at a nominal first wavelength 738 - for example, either an infrared 738' or visible 738" wavelength - into the atmosphere 20, which primarily interacts with aerosols 20" therein, so that the resulting scattered light 30 and associated scattered light signal 30' are primarily a result of scattering by aerosols 20", which can provide for a detection of an associated velocity K of the aerosols 20 in the atmosphere 20, but which does not provide for detecting the corresponding temperature T or density p.

When operated in the second mode of operation, the above-described LIDAR systems 24.1', 24.3', 24<xxv> in accordance with the sixth aspect of the atmospheric measurement system 10<V1> provide for projecting substantially monochromatic light 13<B> at a nominal second wavelength 740 - for example, an ultraviolet wavelength 740' - into the atmosphere 20, which interacts with both molecules 20' and aerosols 20" therein, so that the resulting scattered light 30 and associated scattered light signal 30' are a result of scattering by both molecules 20' and aerosols 20", which can provide for a detection of an associated velocity V of the molecules 20' and aerosols 20" in the atmosphere 20, and which provides for detecting the corresponding temperature T or density p of the molecules 20' of the atmosphere 20.

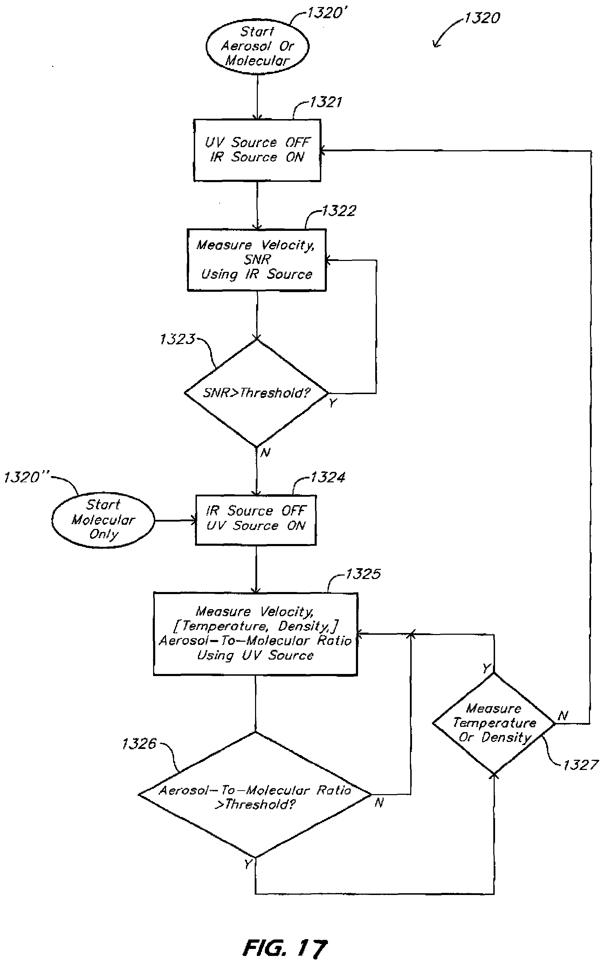

Although the second mode of operation provides for detecting temperature T or density p, operation of the sixth aspect of the atmospheric measurement system 10<V1 > can provide for a longer lifetime and associated greater reliability when operated in accordance with the first mode of operation, i.e. at at either infrared 738' or visible 738" wavelengths, however, with the associated limitation of being able to measure only velocity V, and not temperature T or density p. However, in situations where velocity V alone is sufficient, then if aerosols 20" are present in sufficient amount in the atmosphere 20 so as to provide for a sufficiently strong scattered light signal 30' responsive to illumination by a beam of light 28 comprising infrared 738' or visible 738" wavelengths in accordance with the first mode of operation, then operation in accordance with the first mode of operation would provide for extending the lifetime of the associated atmospheric measurement system 10<VI> and thereby provide for improved reliability. Referring to FIG. 17, when the measurement of velocity V alone is sufficient, the process 1320 of operating the sixth aspect of the atmospheric measurement system 10<V1> so as to provide for such enhanced lifetime and reliability commences with step (1320') after which in step (1321) the second laser 11<B> light source 11 is turned OFF and the first laser 11<A>' light source 11 is turned ON, thereby commencing the first mode of operation. If operating a twenty-fifth aspect of the LIDAR system 24', 24", 24<xxv>, in addition to controlling the first 11<A> and second 11<B> lasers accordingly, the controller/data processor 53' positions the mirror 742 and the filter system 88 in synchronism with this action. Then, in step (1322), the velocity Kof the atmosphere 20 is measured with the associated LIDAR systems 24.1', 24.3', 24<xxv> - as described herein above in detail for other corresponding LIDAR systems 24, - and the corresponding associated single-to-noise ratio SNR of this measurement is determined as described hereinbelow. In step (1323), if the single-to-noise ratio SNR exceeds a corresponding SNR threshold SNRMm - or a substantially equivalent test is satisfied, indicating that there is a sufficient amount of aerosols 20" present in the atmosphere 20 so as to provide for a valid measurement of velocity V - then the process repeats with step (1322) at the next sample in time. Generally, measurement performance is ultimately limited by the ratio given by the level of signal energy divided by the level of noise energy. In practice, this is given by comparing the measurement of signal plus noise to the corresponding measurement of noise alone. The noise level TV of the system may be obtained during a calibration period, or during operation of the system.

For example, with any of the above LIDAR systems 24.1', 24.3', 24<xxv>, during a calibration process, one may simply measure the noise level TV without providing for a scattered light signal 30' from the atmosphere 20. That noise level N could then be used to generate a simple ratio of the measurement of the scattered light signal 30' plus noise - since the measurement of the scattered light signal 30' would inherently include noise- divided by the measured noise level N.

Accordingly, if the measured value of the noisy signal SM- that provides a measure of the signal level S plus the noise level N- exceeds the threshold value that the single-to-noise ratio SNR exceeds the corresponding SNR threshold SNRMIN , then step (1323) repeats with step (1322). Otherwise, the process continues with step (1324) for operation responsive to molecular scattering.

Alternatively, the noise level N could be determined during operation of any of the above LIDAR systems 24.1', 24.3', 24<xxv> by making noise measurements in a different spectral region than that of the scattered light signal 30', which is possible because noise would have nearly equal contribution to each spectral region, whereas the scattered light signal 30' would be limited to a relatively narrow spectral region, thereby provided for using measurements from the sufficiently disparate spectral regions to provide for a measure of the associated single-to-noise ratio SNR.

In step (1324), the first laser 11<A> light source 11 is turned OFF and the second laser 11<B>' light source 11 is turned ON, thereby commencing the second mode of operation. If operating a twenty- fifth aspect of the LIDAR system 24', 24", 24<xxv>, in addition to controlling the first 11<A> and second 11 <B> lasers accordingly, the controller/data processor 53' positions the mirror 742 and the filter system 88 in synchronism with this action. Then, in step (1325), at least the velocity V of the atmosphere 20 is measured and the aerosol-to- molecular scattering ratio AMR is calculated from the ratio of measured aerosol counts A to measured molecular counts M for measurements with the associated LIDAR systems 24.1", 24.3", 24<xxv> as described herein above in detail for other corresponding LIDAR systems 24. The temperature T and density p may also be measured at step (1325) as described hereinabove. Then if, in step (1326), the aerosol-to-molecular scattering ratio AMR is less than a threshold - indicating that there is not a sufficient amount of aerosols 20" present in the atmosphere 20 to make measurements of velocity K from scattering by aerosols 20", then the process repeats with step (1325). Otherwise, from step (1326), if measurements of temperature T or density p are not required, then the process returns to operation response to aerosol scattering by returning to step (1321).

Alternative to commencing with step (1320'), if measurements of temperature T or density p are required, then process 1320 of operating the sixth aspect of the atmospheric measurement system 10<VI> would commence with step (1320") which commences with operation responsive to molecular scattering beginning with step (1324), after which, in step (1325), measurements of one or both of temperature T or density p would be make either alone or together with measurements of velocity V, depending upon the particular need at that time.

The above-described dual operating mode would provide for increasing the lifetime of the overall LIDAR system 24.1', 24.1", 24.3', 24.3", 24<xxv> by reducing the duty cycle of operation during either the first or second modes of operation, particularly for the second mode of operation when using the second wavelength 740, e.g. ultraviolet wavelength 740'of substantially monochromatic light 13<B>, while providing for measurements of at least velocity V from either completely clear air, devoid of aerosols while using the second wavelength 740 - e.g. an ultraviolet wavelength 740',-- or from air containing sufficient aerosol content to use the first wavelength 738 - e.g. an infrared 738' or visible 738" wavelength.

Different LIDAR systems 24.1', 24.1", 24.3', 24.3" could operate using different detection technologies, for example, using a mix of direct detection as described hereinabove, for one of the pair of LIDAR systems 24.1', 24.1", 24.3', 24.3", and heterodyne detection for the other of the pair of LIDAR systems 24.1', 24.1", 24.3', 24.3".

In an alternative embodiment of the LIDAR systems 24.1', 24.1", 24.3', 24.3" illustrated in FIG. 15, both the first 24.1', 24.3'and second 24.1", 24.3" LIDAR systems of each pair could be operated at the second wavelength 740- e.g. an ultraviolet wavelength 740' - so as to provide for both redundant measurements of either aerosol 20" or molecular 20' scattering, but without the benefit of enhance lifetime and reduced duty cycle resulting from operation-where-possible at the first wavelength 738 - e.g. an infrared 738' or visible 738" wavelength.

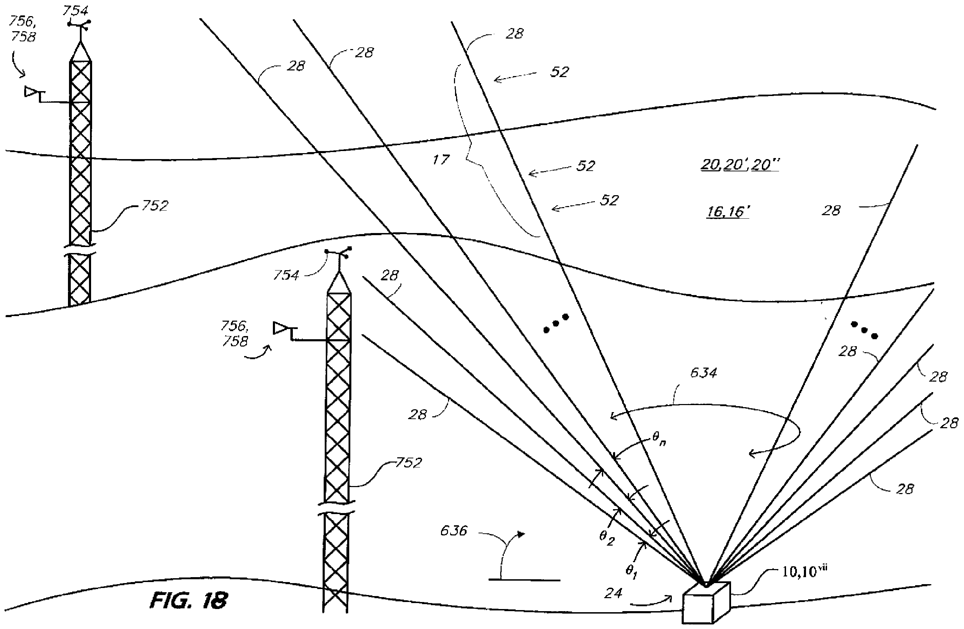

The atmospheric measurement system 10 can be used for assessing or prospecting the suitability of land for wind farm development. The information provided by the map, model or database 62, including wind velocity v, temperature T, density p, or combinations thereof, can be used in conjunction with recording equipment to determine statistics, such as average and standard deviation of associated measureent, over periods of time ranging from seconds to years. These statistics, together with derived measures, such as gusts and turbulent intensity, can be used to guide decision making processes for the size, type, and placement of wind turbines relative to the terrain and to each other, and to provide for estimating the expected energy output of the completed wind farm. Referrring to FIG. 18, there is illustrated a seventh aspect of an atmospheric measurement system 10<v>" comprising an associated LIDAR system 24 and located so as to provide for assessing a particular site for the suitability of producing power from the wind threat. For purposes of comparision, there are also illustrated several meteorological towers 752, also referred to as MET towers 752, that the atmospheric measurement system 10<v>" would replace or supplement, wherein the MET towers 752 provide for supporting one or more associated cup anemometers 754, weather vanes 756 or sonic anemometers 758 that provide for making associated localizd measuremens of wind speed and direction. The atmospheric measurement system 10 can be used to provide data over relatively larger volumes at relatively higher spatial resolution than is practical using MET towers 752 alone. For example, referring to FIG. 18, the LIDAR system 24 is adapted to scan a volume over both a range of azimuth 634 and elevation 636 angles, sweeping out a conical volume either by step-and-stare or continuous scanning over a range that may extend from hundreds of meters to many kilometers. For example, three separate measurements of wind speed vl s v2, v3 can be measured with a common beam of light 28 at a corresponding three separate times and at a corresponding three separte angles, each separted by an angle [Theta] from one another, so as to provide for determining a corresponding vector wind velocity v. In another embodiment, at least three measurements of wind speed vls v2, v3 are measured simultaneously, so as to provide for determining a corresponding instantaneous measurement of vector wind velocity v. Futhermore, the atmospheric measurement system 10<v>" provides for aquiring the associated atmospheric data 36 without requiring a MET tower 752 that might otherwise perturb the associated wind field 16'.

The resulting measurements of wind velocity v, atmospheric density p, and atmospheric temperature T, can be used as inputs into various software program products, for example numerical weather prediction models, such as the Weather Research and Forecasting (WRF) model, MM5; equivalent physics-based models; computational fluid dynamics (CFD) models, such as AcuSim, WindSim, or Fluent; or wind turbine site assessment software, so as to provide for site assessment, turbine placement, turbine power curve validation, or wind farm forecasting applications. Turbulence and shear, caused by complex terrain, atmospheric conditions, or turbine wake effects, can also be measured more accurately using data from the map, model or database 62 gathered by one or more LIDAR systems 24 of one or more associated atmospheric measurement systems 10<v>".

For example, a common tool for assessing the suitability of a site is the Wind Atlas Analysis and Application Program (WAsP). Long term time series of wind speed and direction are input into WAsP as a tab delimited file. Once input into WAsP, the wind data are converted into a Weibull fit and extended to the geostrophic wind layer. Using the additional inputs of topography and surface roughness, WAsP ultimately produces a Wind Resource Grid (WRG) file. The WRG is a text file containing the coordinates, height above ground level, estimated overall wind climate, and estimated power density or power production at each of a number of locations in a resource grid. Garrad Hassan's WindFarmer makes use of the frequency characteristics of the original data rather than relying on Weibull representations using a process known as "association." WindFarmer also includes modeling of the wake effects from turbines. Using either WAsP alone or an expanded model, such as WindFarmer, the result is a prediction of energy output from the potential wind farm site.

If adapted to utilize data from a map, model or database 62 based upon measurements from one or more LIDAR systems 24 of one or more associated atmospheric measurement systems 10<v>", program products such as WAsP and WindFarmer, or other commercially available wind site assessment or wind farm design program products, could likely benefit from the relatively richer set of data that is possible to aquire using the one or more LIDAR systems 24 of one or more associated atmospheric measurement systems 10<v>" so as to provide for improved results.

The map, model or database 62 can also be used in conjunction with mesoscale meteorological models, such as MM5, to model the associated wind field 16'. The substantial amount of data available from the atmospheric measurement system 10<v>" can provide for improving the associated wind field model and as a result, provide for more accurately predicting the corresponding amount of energy that would be generated by each wind turbine 14.

The 3-D volumetric nature of the data produced by the atmospheric measurement system 10<v>" can also be used in conjunction with computational fluid dynamics (CFD) software to improve the measurement of key wind turbine design parameters, for example, hub-height wind speed and turbulent intensity, so as to provide for a relatively more accurate assessment of the suitability of a particular wind turbine site, and so as to provide the information needed to design the wind farm 12 and the associated wind turbines 14 therein.

As described more fully hereinabove, the power available from the wind 16 is dependent upon both the associated velocity v and density p thereof. As measurements of air pressure are not typically made on site, air density p is typically calculated from temperature and elevation. Accordingly, many wind turbine site assessment models allow for input of elevation in addition to either temperature T or air density p. Temperature T varies nearly linearly with elevation above sea level over typical wind farm elevations. To convert between air temperature T and air density p, assumptions are normally made with respect to the profiles of each parameter throughout the atmosphere 20. For example, it may be assumed that air density p decreases exponentially with elevation, implying an isothermal temperature profile.

However, the atmospheric measurement system 10<v>" would provides for directly measuring air density p, thereby eliminating any need to calculate air density p indirectly from temperature J and elevation. The atmospheric measurement system 10<v>" provides for measuring density p at a relatively high spatial resolution so as to enable calculating the power that could or should be generated by each turbine or potential turbine, either as part of a wind turbine site assessment, for example, as illustrated in FIG. 18; or for validation of the power generated by a wind tubine 14, for example, as illustrated in FIGS. 135 and 136. The relatively high spatial resolution of the air density p measurements that are possible with the atmospheric measurement system 10<v>" provide for more accurately determining the wind power that is available at a particular site or that is driving a particular wind turbine 14.

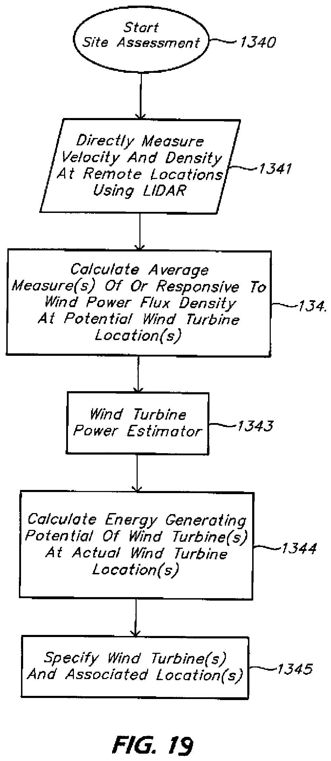

Referring to FIG. 19, in accordance with one embodiment of a wind turbine site assessment process 1340, commencing with step (1341), the wind velocity v and associated air density p are directly measured in the atmosphere 20 at a plurality of measurement volumes 52 therein using one or more beams of light 28 projected into the atmosphere 20 from one or more LIDAR systems 24 of one or more associated atmospheric measurement systems 10<v>" responsive to the resulting scattered light 30 received from the associated measurement volumes 52 within one or more associated interaction regions 17 along associated one or more beams of light 28 by the associated one or more LIDAR systems 24. For example, one or more associated beams of light 28 may be scanned over a range of azimuth 634 or elevation 636 angles, or a combination thereof; a plurality of simultaneously-generated beams of light 28, each oriented in a different direction, may be either fixed or scanned, or a combination thereof may be used. The one or more LIDAR systems 24 may be constructed and operated in accordance with any of the above-described embodiments. Atomospheric data 36, including at least velocity V and density p is gathered by the one or more LIDAR systems 24 for the plurality of associated interaction regions 17 and measurement volumes 52 therein. Then, in step (1342), one or more average measures of or responsive to wind power flux density [psi] are calculated at prospective wind turbine 14 locations, and in step (1343), the wind power P* that would be available for power generation is calculated, for example, using equations (l)-(3), and in step (1344) the corresponding associated electrical energy generating potential of a prospective one or more wind turbine(s) 14 is calculated at the the prospective wind turbine 14 locations. Two or more of steps (1342)-(1344) could be combined and carried out in one or more of the above-described numerical weather prediction, wind turbine site assessment, or computational fluid dynamics (CFD) software program products, which could use the associated atmospheric data 36 directly, thereby providing for bypassing step (1342). The results of step (1344) provide for specifying in step (1345) the wind turbines 14 and associated locations thereof on the site being assessed.

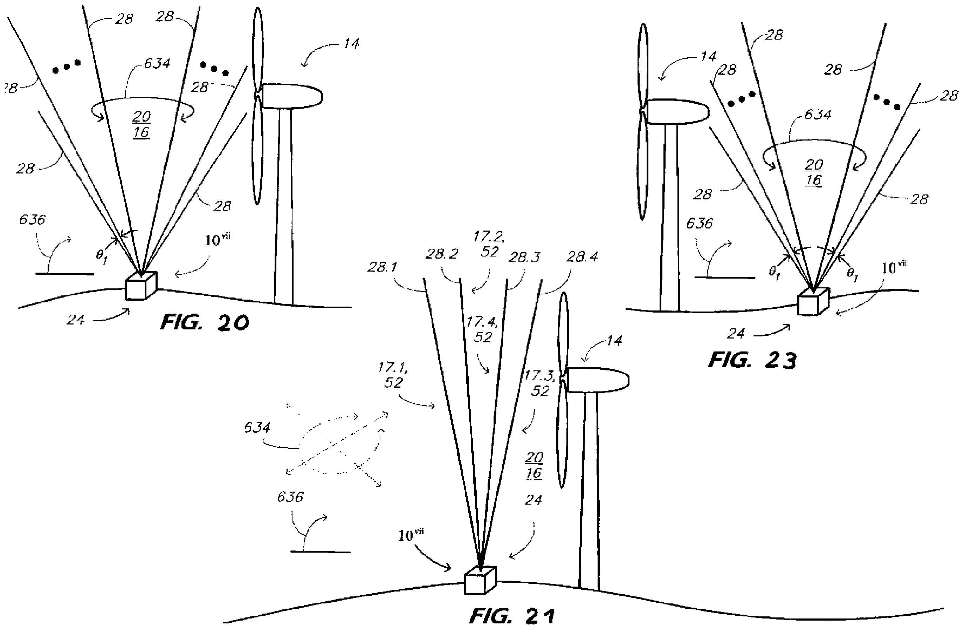

Referring to FIGS. 20 and 21, first and second embodiments of this aspect of an atmospheric measurement systems 10<v>" are each illustrated in cooperation with a wind turbine 14 for use in validating the electrical power output of the wind turbine 14 in relation to the corresponding wind power P* to which the wind turbine 14 is exposed. The atmospheric measurement systems 10<v>" illustrated in FIG. 21 explicitly illustrates the used of a plurality of four simultaneously generated beams of light 28.1, 28.2, 28.3, 28.4 - each oriented in a different direction- that provide for simultaneously sampling the atmosphere 20 at one or more measurement volumes 52 within each of one or more interaction regions 17.1, 17.2, 17.3, 17.4 along each of the corresponding beams of light 28.1, 28.2, 28.3, 28.4, for example, so as to provide for determining a corresponding instantaneous wind velocity v for each associated sample of the atmospheric data 36 from each of the one or more measurement volumes 52 within each of one or more interaction regions 17.1, 17.2, 17.3, 17.4. The set of the simultaneously generated beams of light 28.1, 28.2, 28.3, 28.4 may be scanned in azimuth and elevation over time so as to provide for increasing the extent over which the atmospheric data 36 is acquired.

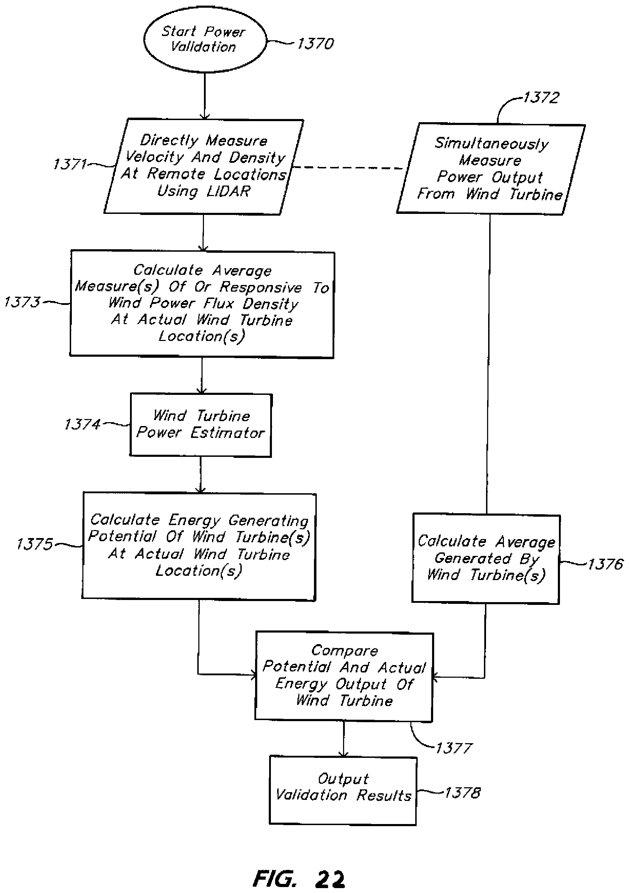

Referring to FIG. 22, steps (1371) through (1375) of one embodiment of a wind turbine power validation process 1370 correspond to steps (1341) through (1344) of the above-described wind turbine site assessment process 1340 and provide for calculating the electrical energy generating potential of the one or more wind turbine(s) 14 being validated, wherein the corresponding atmospheric data 136 measured in step (1371) in in a region of the atmosphere 20 upstream of the one or more wind turbine(s) 14 so as to provide for estimating in step (1373) the corresponding wind power P* to which the one or more wind turbines 14 are exposed. Simultaneous with step (1371), in step (1372) the actual power generated by the one or more wind turbine(s) 14 is measured, and then step (1376) provides for calculating the actual amount of electrical energy generated by the one or more wind turbine(s) 14, which in step (1377) is compared with the estimate from step (1375) of the corresponding energy generating potential determined from measurements of the associated wind field 16' so as to provide for validating the one or more wind turbine(s) 14 and the associated power curve(s) thereof that characterize the performance thereof. The results of the validation are then output in step (1378). Referring to FIG. 23, the atmospheric measurement systems 10<v>" may also be used to characterize the wake flow behind a wind turbine 14, for example, by measuring the corresponding wind field 16' downstream thereof from measurements of the vector wind velocity v at a plurality of locations downstream of the wind turbine 14 and at a plurality of time, for example, with sufficient spatial and temporal resolution so as to provide for characterizing the resulting turbulent eddies 59 caused by the operation of the wind turbine 14.

The LIDAR systems can be adapted as LIDAR systems 24 or a LIDAR system 24 to measure air data products on a variety of platforms, for example, including, but not limited to, satellites 406, aircraft 400, UAVs 402, glide weapon systems, ground-based platforms (stationary or mobile), and watercraft. The LIDAR systems 24 can be adapted to measure air data products of a variety of atmospheres 20, for example, that of the Earth or other planetary or celestial bodies, or can be adapted to measure or map air data products of fields within a wind tunnel or surrounding an aerodynamic body during the operation thereof. Furthermore, although one embodiment uses ultraviolet (UV) laser light, the LIDAR system 24 can operate over a large range of wavelengths spanning from the visible down to the ultraviolet. The ultraviolet light provides additional stealth characteristics for the system because the light is quickly absorbed by the atmosphere 20, and is not otherwise easily detected from relatively long-range distances. However, the LIDAR system 24 can also operate in other wavelength regions, such as longer ultraviolet wavelengths or even visible wavelengths. For example, a variety of lasers 11' can be used, including, but not limited to: Ruby (694 nm); Neodymium-based lasers: Nd:YAG, Nd: Glass (1.062 microns, 1.054 microns), Nd:Cr:GSGG, Nd:YLF (1.047 and 1.053 microns), Nd:YVO (ortho vanadate, 1.064 microns); Erbium-based lasers: Er:YAG and Er:Glass; Ytterbium-based lasers: Yb:YAG (1.03 microns); Holmium-based lasers: Ho:YAG (2.1 microns); Thulium-based lasers: Tm:YAG (2.0 microns); and tunable lasers: Alexandrite (700-820 nm), Ti:Sapphire (650- 1100 nm), and Cn-LiSAF. The associated laser 11' can be either pulsed- at any Pulse Repetition Frequency (PRF)-or continuous wave (CW).

Any LIDAR system in accordance with any of the above-described aspects can be used as a LIDAR system 24 for any optical remote sensing scenario to provide atmospheric data 36. For example, the LIDAR system 24 could be applied to the detection of Clear Air Turbulence, Optical Air Data systems, Atmospheric Aerosol Characterization, Smog detection and Chemical/Biological Agent detection. The LIDAR system 24 can be used to provide air data for Field Artillery Fire Direction Control, Small Arms Wind correction, Airport Turbulence Monitoring and Ship Navigation velocity/weather monitoring. The LIDAR system 24 can also be used to provide air data for predicting winds for any sporting events in which micro-scale airflow plays a significant role such as golf, football, baseball, etc. This LIDAR system 24 can also be used to provide air data for Wind Farm Site Prospecting, Assessment, and Optimization, Wind Farm Monitoring, Wake Effects Measurement and Analysis, Wind Turbine Control and Weather Forecasting for Wind Farms and Grid Management.

For example, in application to artillery, the LIDAR system 24 can be mounted on a vehicle or carried by an operator to a location from which artillery is to be fired. The LIDAR system 24 would then measure atmospheric parameters such as wind speed, wind direction, temperature, density, and pressure in the atmospheric volume through which the projectile will be fired. These are the standard inputs to contemporary fire direction control systems in use by the military, for example, as described in FM 6-40/MCWP 3-16.4 Tactics, Techniques, and Procedures for FIELD ARTILLERY MANUAL CANNON GUNNERY (Field Manual). By accounting for these atmospheric parameters along the projectile's flight path, the circular error probable (CEP) can be reduced and accuracy improved.

As another example, in application to sailing ships, the LIDAR system 24 can be used to provide measures of wind speed, wind direction, temperature, density, pressure, or the associated wind field around the ship, for ships that obtain their propulsion from the wind. For example, racing yachts such as used in the America's Cup, can benefit from knowing the winds near their ship as well as the winds near their competition. This information can be used to provide for trimming sails, deploying wings or aerodynamic propulsion devices, or planning trajectories so as to take maximum advantage of the current wind conditions. Recreational users can similarly use information about the winds blowing in the region near their craft.

As yet another example, in application to sporting events, the LIDAR system 24 can provide information about the local winds so as to enable participants to adapt accordingly. For example, a golf player can compensate for or take advantage of local winds, given information about how the wind is blowing over the entire flight path of the ball, or if a wind gust was approaching or would soon dissipate, so as to enable the golfer to either adjust their shot according, or to wait for better conditions. Even if the wind information is not available to the individual players, it would be of benefit to broadcasters in showing the viewing audience a graphic of the winds, a trajectory of the ball, and how the winds affected a particular shot. The LIDAR system 24 can also be of benefit in other sporting venues, such as baseball or football, for example, so as to enable broadcasters to illustrate how a baseball might have been held up by the winds in the stadium, or to show how winds had impacted a pass, punt or field goal in football, to as to enhance the viewing experience for fans. Given information about the winds in the stadium, players could adjust their actions accordingly, for example, when hitting a fly ball or kicking a field goal. As yet another example, in application to the control of wind-induced building sway, the LIDAR system 24 can provide advance information about the wind field of a building so as to provide for wind-responsive or wind-anticipative control of tall buildings that are otherwise subject to sway in strong winds. Most modern tall buildings incorporate some form of damping to control how much the building sways in strong winds. The LIDAR system 24 can provide a predictive component (feed forward) to the associated control loops, so as to provide for improving the performance of these damping systems. associated control loops, so as to provide for improving the performance of these damping systems. As yet another example, in application to road safety, the LIDAR system 24 can be used to monitor the wind fields that affect bridges, so as either to provide for an active control of the bridge structure responsive thereto, or to provide for controlling or limiting traffic over the bridge. Similarly, the LIDAR system 24 can be used to monitor wind conditions along roads in zones where high winds regularly pose a danger to travelers, and provide a real-time alert to motorists who are about to enter these zones. The LIDAR system 24 can be used to detect the presence of fog in fog-prone road zones, and to alert motorists of the presence of fog in advance of entering these zones.

As yet another example, in application to the control and/or dispersal of air pollution, the LIDAR system 24 can be used in a portable wind measuring system so as to enable responsible parties to more accurately predict where airborne pollution is headed as well as assisting in the assessment how much the pollution is being dispersed or diluted. Local wind mapping along with temperature and pressure measurements would provide input to models for prediction of the Nominal Hazard Zone even when there are no visible aerosols to define the plume.

As yet another example, the LIDAR system 24 can be used in a wind tunnel to provide for range resolved airflow measurements within the wind tunnel that can provide density and temperature as well as velocity of the air flow within the wind tunnel at a point, along a line, or within a volume of the wind tunnel, without perturbing the associated flow field, wherein the wind tunnel is used to measure how airflow interacts with the objects being tested therein.

As yet another example, the LIDAR system 24 can be used at an airport to enhance airport safety, for example, by providing for detecting clear air turbulence resulting from large aircraft taking off or landing, and to also provide measures of air temperature and density that can affect the lift, and hence performance, of aircraft operating at that airport.

As yet another example, the LIDAR system 24 can be used to enhance aircraft safety, for example, by providing for mapping the winds in the vicinity of an aircraft and thus providing the pilot with information that is difficult at best to obtain with other means. For example, in a roto-craft, the LIDAR system 24 can provide wind information outside of the rotor down wash so as to aid the pilot in maintaining hover in gusty wind conditions. In a conventional fixed-wing aircraft, the LIDAR system 24 can provide a measure of cross winds during landing or takeoff, and can be used to detect clear air turbulence during flight. In a sail-plane aircraft, the LIDAR system 24 can provide a measure of the wind field within which the aircraft is operating, and can provide assistance in locating updrafts in order to stay aloft. The LIDAR system 24 provides for measuring wind speed, air temperature and air density, which, for example, for purposes of landing, might not be otherwise available at some airfields.

As yet another example, a LIDAR system 24 can be used support airdrops, for example, by either monitoring the wind field below from the aircraft making the drop so as to determine when to drop the payload, or by monitoring the wind field aloft with a LIDAR system 24 mounted on the payload so as to provide for adjusting the associated parachute during descent so as to provide for controlling the resulting drop location so that the payload is deposited closer to the desired drop zone than might otherwise be possible. Alternatively, the wind field could be monitored from above by an associated aircraft, and the resulting measurements could then be communicated to the payload to provide for controlling one or more associated parachutes or drag chutes accordingly so as to control the resulting drop location.

As yet another example, a LIDAR system 24 can be used to characterize the atmosphere 20. A LIDAR system 24 can be used to provide range resolved measures of velocity temperature, and density of the atmosphere 20 that can be used by meteorologists and/or by atmospheric scientists, for example, so as to provide for predicting or analyzing the weather.

As yet another example, a LIDAR system 24 can be used on ocean and lake buoys and other ocean platforms, for example, site assessment and optimization for off-shore wind farms, oil drilling and production platforms, so as to provide range resolved measures of wind speed and direction, for example, to provide for landing helicopters, to control the location of the platform on the ocean, or to provide a warning for general platform operations in advance of the occurrence of high winds or wind gusts.

The LIDAR system 24 is not limited to the detection of flow within or of the atmosphere 20. Generally, the LIDAR system 24 can be used to detect any object from which the beam of light 28 would scatter, or to detect the flow of any medium through which the associated beam of light 28 will propagate and from which the beam of light 28 will scatter. For example, depending upon the wavelength of the light source 11, the LIDAR system 24 could be used to detect the flow of other gases; or liquids, for example, water or liquid chemicals or solutions.

It should be understood that the LIDAR systems 24 can be used with any fluid medium that provides for generating detectable scattered light 30 when illuminated with a beam of light 28, including, but not limited to, non-atmospheric gases flowing in a pipe and liquids flowing in pipes, channels or sprays. For example, the LIDAR systems 24 could also be used to measure water flow in pipes or channels, or to provide for measuring the speed of a marine vehicle or the associated conditions of the water upon which or within which the marine vehicle operates.

Furthermore, although the LIDAR systems 24 described herein have been illustrated with associated geometries that provide for detecting backscattered scattered light 30, it should be understood that a LIDAR system 24 could also or alternatively incorporate an associated geometry that provides for detecting either transversely scattered light 30, or forward scattered light 30. Yet further, although the range-imaging LIDAR systems described herein have been illustrated as providing for range-responsive measurements responsive to a range R along the optic axis 23 of the receive optics 32, for example, a range R to the receive optics 32 or the detection system 34, the range-responsive measurements could also be characterized with respect to a range measured along the optic axis 25 of the beam of light 28, or any other axis, by geometric transformation. The aforementioned US-A-7,495,774 illustrates additional embodiments of LIDAR systems 24 and associated platforms that may be incorporated in the atmospheric measurement system 10.

**Claims**

1. A method of remotely sensing an atmosphere (20), comprising:

   projecting one of a first beam of first light (13A) and a second beam of second light (13B) into an atmosphere (20) at a first point in time so as to provide for one of said first light (13A) and said second light (13B) to become scattered by said atmosphere (20) as a corresponding one of scattered first light and scattered second light, wherein said first light (13A) comprises a first wavelength (738) that provides for scattering said first light (13A) substantially only from said aerosols of said atmosphere, no more than an insubstantial portion of said first light is scattered by said molecules of said atmosphere, and wherein said second light (13B) comprises a second wavelength (740) that provides for scattering said second light (13B) from either molecules or aerosols of said atmosphere (20), , wherein
   a distribution of wavelength of said one of said scattered first light and said scattered second light is responsive to at least one physical property of said atmosphere (20);
   receiving one of said scattered first light and said scattered second light scattered from said atmosphere (20);
   generating at least one first interference pattern responsive to said one of said scattered first light and said scattered second light, wherein said at least one first interference pattern is responsive to said distribution of wavelengths of said one of said scattered first light and said scattered second light;
   detecting said at least one physical property of said atmosphere (20) from said at least one interference pattern, wherein

at least one of a measure of signal-to-noise ratio and a measure of an aerosol-to-molecular ratio is detected from said at least one first interference pattern, wherein said aerosol-to-molecular ratio is a ratio of an amount of said scattered light of said beam of second fight (13B) by said aerosols in said atmosphere (20) to an amount of said scattered light of said beam of second light (13B) scattered by said molecules in said atmosphere (20); wherein
one of said beam of first light (13A) and said beam of second light (13B) is selected to be projected into said atmosphere (20) at a second point in time after said first point in time, wherein the operation of selecting said one of said beam of first light (13A) and said beam of second light (13B) to be projected into said atmosphere (20) at said second point in time is responsive to said at least one of said measure of signal-to-noise ratio and said measure of said aerosol-to-molecular ratio; and wherein said beam of first light (13A) is selected for projection into said atmosphere (20) at said second point in time if said measure of signal-to-noise ratio or said aerosol-to-molecular ratio is greater than a threshold, and wherein said beam of second light (13B) is selected for projection into said atmosphere (20) at said second point in time if said measure of signal-to-noise ratio or said aerosol-to-molecular ratio is less than said threshold.

2. A method of remotely sensing an atmosphere (20) as recited in claim 1, further comprising generating said one of said beam of first light (13A) and said beam of second light (13B) with a corresponding one of a first light source (11A) and a second light source (11B) at said first point in time.

3. A method of remotely sensing an atmosphere (20) as recited in claim 2, further comprising activating said one of said first light source (11A) and said second light source (11B) from an inactivated state prior to the operation of generating said one of said beam of first light (13A) and said beam of second light (13B) at said first point in time.

4. A method of remotely sensing an atmosphere (20) as recited in claim 1, wherein when projected into said atmosphere (20) said beam of first light (13A) and said beam of second light (13B) are each projected through a common set of source optics (15), further comprising selecting said one of said first beam of first light (13A) and said second beam of second light (13B) by positioning a mirror (742) that provides for reflecting at least one of said first beam of first light (13A) and said second beam of second light (13B) from a corresponding source (11A., 11B) to said common set of source optics (15).

5. A method of remotely sensing an atmosphere (20) as recited in claim 1, further comprising optically bandpass filtering said one of said scattered first light (13A) and said scattered second light (13B) prior to the operation of generating said at least one first interference pattern, wherein the operation of optically bandpass filtering comprises passing a range of wavelengths of said one of said scattered first light (13A) and said scattered second light (13B) spanning a wavelength of corresponding said first light or second light.

6. A method of remotely sensing an atmosphere (20) as recited in claim 1, wherein the operation of generating said at least one first interference pattern comprises interfering said one of said scattered first light and said scattered second light with corresponding said one of said first light (13A) and said second light (13B).

7. A method of remotely sensing an atmosphere (20) as recited in claim 1, further comprising simultaneously generating a second interference pattern responsive to said one of said first light (13A) and said second light (13B), wherein said at least one first interference pattern and said second interference pattern are generated by a common interferometer, and the operation of detecting said at least one physical property of said atmosphere (20) is further responsive to said second interference pattern.

8. An atmospheric measurement system, comprising:

first light source (11A), wherein said first light source (11A) provides for generating a beam of first light (13A), said first light (13A) comprises a first wavelength (738) that provides for scattering said first light (13A) substantially only from said aerosols of said atmosphere, and no more than an insubstantial portion of said first light is scattered by said molecules of said atmosphere, a second light source (11B), wherein said second light source provides for generating a beam of second light (13B) comprising a second wavelength (740) that provides for scattering said second light (13B) from either molecules or aerosols of an atmosphere (20), at least one set of source optics (15) in cooperation with said first and second light sources (13A, 13B), wherein said at least one set of source optics (15) provides for projecting either said beam of first light (13A) or said beam of second light (13B) into said atmosphere (20) so as to provide for one of said first light (13A) and said second light (13B) to become scattered by said atmosphere (20) as a corresponding one of scattered first light and scattered second light, wherein

a distribution of wavelengths of said one of said scattered first light (13A) and said scattered second light (13B) is responsive to at least one physical property of said atmosphere (20);

at least one interferometer (31), wherein said at least one interferometer (31) provides for receiving either said scattered first light (13A) or said scattered second light (13B) from said atmosphere (20) and for generating a corresponding at least one first interference pattern in response thereto;

at least one detection system (34), wherein said at least one detection system (34) provides for detecting said at least one interference pattern;

at least one processor (124), wherein said at least one processor (124) in cooperation with said at least one detection system (34) provides for detecting said at least one physical property of said atmosphere (20) from said at least one interference pattern,

said at least one processor (124) in cooperation with said at least one detection system (34) provides for detecting at least one of a measure of signal-to-noise ratio and a measure of an aerosol-to-molecular ratio from said at least one first interference pattern, said aerosol-to-molecular ratio is a ratio of an amount of said scattered first light of said beam of second light (13B) by said aerosols in said atmosphere (20) to an amount of said scattered light of said second beam of light (13B) scattered by said molecules in said atmosphere (20), wherein

said at least one processor (124) provides for selecting one of said beam of first light (13A) and said beam of second light (13B) to be projected into said atmosphere (20) at a second point of time after said first point of time, wherein the operation of selecting said one of said beam of first light (13A) and said second beam of second light (13B) to be projected into said atmosphere (20) is responsive to said at least one of said measure of signal-to- noise ratio and said measure of said aerosol-to-molecular ratio responsive to said beam of second light(13B)and wherein

said at least one processor (124) further provides to select said beam of first light (13A) for projection into said atmosphere (20) at said second point in time if said measure of signal-to-noise ratio or said aerosol-to-molecular ratio is greater than a threshold, and to select said beam of second light (13B) for projection into said atmosphere (20) at said second point in time if said measure of signal-to-noise ratio or said aerosol-to-molecular ratio is less than said threshold,

9. An atmospheric measurement system as recited in claim 8, wherein said at least one physical property comprises at least one of a measure responsive to a velocity of said atmosphere (20), a measure responsive to a temperature of said atmosphere (20) and a measure responsive to a density of said atmosphere (20).

10. An atmospheric measurement system as recited in claim 8, wherein said at least one set of source optics comprises first and second sets of source optics, said first light source cooperates with said first set of source optics, and said second light source cooperate with said second set of source optics.

11. An atmospheric measurement system as recited in claim 8, wherein said first and second light sources cooperate with a common set of source optics.

12. An atmospheric measurement system as recited in claim 8, further comprising:

   a mirror (742) that provides for said first (11A) and second light source (11B) to cooperate with said common set of source optics (15); and
   an actuator under control of said at least one processor (124) that provides for positioning said mirror (742) in one of two positions, wherein in a first position, said mirror provides for said first beam of first light (13A) from said first light source (11A) to be projected by said common set of source optics (15) into said atmosphere (20), and in a second position said mirror (742) provides for said second beam of second light (13B) from said second light source (11B) to be projected by said common set of source optics (15) into said atmosphere (20).

13. An atmospheric measurement system as recited in claim 12, wherein said first position comprises a first rotational position and said second position comprises a second rotational position, wherein said beam of first light (13A) is reflected from a first surface of said mirror (742) when said mirror (742) is in said first rotational position and wherein said beam of second light (13B) is reflected from a second surface of said mirror (742) when said mirror (742) is in said second rotational position-.

14. An atmospheric measurement system as recited in claim 8, further comprising at least one set of receive optics (32), wherein said at least one set of receive optics (32) provide for receiving either said scattered first light or said scattered second light from said atmosphere (20) prior to said at least one interferometer (31).

15. An atmospheric measurement system as recited in claim 14, wherein said at least one set of receive optics comprises:

   a first set of receive optics adapted to receive said scattered second light from said atmosphere (20) in cooperation with said second light source(11B); and
   a second set of receive optics adapted to receive said scattered first light from said atmosphere (20) in cooperation with said first light source (11A).

16. An atmospheric measurement system as recited in claim 14, wherein said at least one set of receive optics comprises a common set of receive optics (15), and said at least one interferometer (31) comprises a common interferometer adapted to receive either said scattered first light (13A) or said scattered second light (13B) from said common set of receive optics (15).

17. An atmospheric measurement system as recited in claim 8, further comprising first and second bandpass filters (88A, 88B) in cooperation with said at least one interferometer (31), wherein said first bandpass filter (88A) provides for passing said first wavelength (738) in cooperation with said first light source (11A), said second bandpass filter (88B) provides for passing said second wavelength (740) in cooperation with said second light source (11B).

18. An atmospheric measurement system as recited in claim 8, wherein said at least one interferometer (31) comprises at least one Fabry-Perot interferometer or, as an alternative, either a spatial heterodyne spectrometer or a Doppler asymmetric spatial heterodyne spectrometer.

19. An atmospheric measurement system as recited in claim 8, further comprising at least one collimator (33) in cooperation with said at least one interferometer (31) so as to provide for collimating either said scattered first light or said scattered second light from said atmosphere (20) prior to the generation of said at least one first interference pattern.

20. An atmospheric measurement system as recited in claim 8, wherein said at least one detection system comprises a direct detection system, or a heterodyne detection system of said atmosphere (20).

**Patentansprüche**

1. Verfahren zur Fernmessung einer Atmosphäre (20), folgende Schritte umfassend:

   Projizieren entweder eines ersten Strahls eines ersten Lichts (13A) oder eines zweiten Strahls eines zweiten Lichts (13B) in eine Atmosphäre (20) zu einem ersten Zeitpunkt, um zu ermöglichen, dass entweder das erste Licht (13A) oder das zweite Licht (13B) durch die Atmosphäre (20) gestreut und dadurch entsprechend zu gestreutem ersten Licht oder gestreutem zweiten Licht wird, wobei das erste Licht (13A) eine erste Wellenlänge (738) hat, die sicherstellt, dass das erste Licht (13A) im Wesentlichen nur durch die Aerosole der Atmosphäre gestreut wird, dabei lediglich ein unwesentlicher Teil des ersten Lichts durch die Moleküle der Atmosphäre gestreut wird, und wobei das zweite Licht (13B) eine zweite Wellenlänge (740) hat, die sicherstellt, dass das zweite Licht (13B) entweder von Molekülen oder Aerosolen der Atmosphäre (20) gestreut wird, wobei

eine Wellenlängenverteilung entweder des gestreuten ersten Lichts oder des gestreuten zweiten Lichts als Reaktion auf zumindest eine physikalische Eigenschaft der Atmosphäre (20) erfolgt;

Empfangen entweder des von der Atmosphäre (20) gestreuten ersten Streulichts oder zweiten Streulichts;

Erzeugen zumindest eines ersten Interferenzmusters als Reaktion auf entweder das gestreute erste Licht oder das gestreute zweite Licht, wobei das zumindest eine erste Interferenzmuster als Reaktion auf die Wellenlängenverteilung entweder des gestreuten ersten Lichts oder des gestreuten zweiten Lichts erzeugt wird;

Erfassen der zumindest einen physikalischen Eigenschaft der Atmosphäre (20) aus dem zumindest einen Interferenzmuster, wobei zumindest entweder ein Maß eines Signal-Rausch-Abstandes oder ein Maß eines Aerosol-Molekül-Verhältnisses aus dem zumindest einen ersten Interferenzmuster erfasst wird, wobei das Aerosol-Molekül-Verhältnis ein Verhältnis einer Menge des durch die Aerosole in der Atmosphäre (20) gestreuten Lichts des Strahls des zweiten Lichts (13B) zu einer Menge des durch die Moleküle in der Atmosphäre (20) gestreuten Lichts des Strahls des zweiten Lichts (13B) darstellt; wobei

entweder der Strahl des ersten Lichts (13A) oder der Strahl des zweiten Lichts (13B) zur Projektion in die Atmosphäre (20) zu einem zweiten Zeitpunkt nach dem ersten Zeitpunkt ausgewählt wird,

wobei der Vorgang des Auswählens entweder des Strahls des ersten Lichts (13A) oder des Strahls des zweiten Lichts (13B) zur Projektion in die Atmosphäre (20) zu dem zweiten Zeitpunkt als Reaktion auf zumindest entweder des Maßes des Signal-Rausch-Abstands oder des Maßes des Aerosol-Molekül-Verhältnisses erfolgt; und wobei der Strahl des ersten Lichts (13A) zur Projektion in die Atmosphäre (20) zu dem zweiten Zeitpunkt ausgewählt wird, wenn das Maß des Signal-Rausch-Abstands oder des Aerosol-Molekül-Verhältnisses einen Grenzwert übersteigt, und wobei der Strahl des zweiten Lichts (13B) zur Projektion in die Atmosphäre (20) zu dem zweiten Zeitpunkt ausgewählt wird, wenn das Maß des Signal-Rausch-Abstands oder des Aerosol-Molekül-Verhältnisses den Grenzwert unterschreitet.

2. Verfahren zur Fernmessung einer Atmosphäre (20) nach Anspruch 1, des Weiteren umfassend das Erzeugen entweder des Strahls des ersten Lichts (13A) oder des Strahls des zweiten Lichts (13B) mit entweder einer entsprechenden ersten Lichtquelle (11A) oder einer entsprechenden zweiten Lichtquelle (11B) zu dem ersten Zeitpunkt.

3. Verfahren zur Fernmessung einer Atmosphäre (20) nach Anspruch 2, des Weiteren umfassend das Aktivieren entweder der ersten Lichtquelle (11A) oder der zweiten Lichtquelle (11B) aus einem inaktivierten Zustand vor dem Vorgang der Erzeugung entweder des Strahls des ersten Lichts (13A) oder des Strahls des zweiten Lichts (13B) zu dem ersten Zeitpunkt.

4. Verfahren zur Fernmessung einer Atmosphäre (20) nach Anspruch 1, bei dem bei der Projektion in die Atmosphäre (20) der Strahl des ersten Lichts (13A) und der Strahl des zweiten Lichts (13B) jeweils durch eine gemeinsame Quellenoptik (15) projiziert werden, des Weiteren umfassend das Auswählen entweder des ersten Strahls des ersten Lichts (13A) oder des zweiten Strahls des zweiten Lichts (13B) durch Positionieren eines Spiegels (742), der sicherstellt, dass zumindest entweder der erste Strahl des ersten Lichts (13A) oder der zweite Strahl des zweiten Lichts (13B) von einer entsprechenden Quelle (11A, 11B) zu der gemeinsamen Quellenoptik (15) reflektiert wird.

5. Verfahren zur Fernmessung einer Atmosphäre (20) nach Anspruch 1, des Weiteren umfassend das optische Bandpassfiltern entweder des gestreuten ersten Lichts (13A) oder des gestreuten zweiten Lichts (13B) vor dem Vorgang des Erzeugens des zumindest einen ersten Interferenzmusters, wobei der Vorgang des optischen Bandpassfilterns das Durchlassen eines Wellenlängenbereichs entweder des gestreuten ersten Lichts (13A) oder des gestreuten zweiten Lichts (13B) umfasst, welcher eine Wellenlänge des entsprechenden ersten Lichts oder des zweiten Lichts umfasst.

**6.** Verfahren zur Fernmessung einer Atmosphäre (20) nach Anspruch 1, bei dem der Vorgang des Erzeugens des zumindest einen ersten Interferenzmusters das Interferieren entweder des gestreuten ersten Lichts oder des gestreuten zweiten Lichts mit entweder dem entsprechenden ersten Licht (13A) oder dem entsprechenden zweiten Licht (13B) umfasst.

**7.** Verfahren zur Fernmessung einer Atmosphäre (20) nach Anspruch 1, des Weiteren umfassend das gleichzeitige Erzeugen eines zweiten Interferenzmusters als Reaktion auf entweder das erste Licht (13A) oder das zweite Licht (13B), wobei das zumindest eine erste Interferenzmuster und das zweite Interferenzmuster durch ein gemeinsames Interferometer erzeugt werden, und der Vorgang des Erfassens der zumindest einen physikalischen Eigenschaft der Atmosphäre (20) des Weiteren als Reaktion auf das zweite Interferenzmuster erfolgt.

**8.** System zur Atmosphärenmessung, umfassend:

Eine erste Lichtquelle (11A), wobei die erste Lichtquelle (11A) das Erzeugen eines Strahls eines ersten Lichts (13A) ermöglicht, wobei das erste Licht (13A) eine erste Wellenlänge (738) umfasst, die sicherstellt, dass das erste Licht (13A) im Wesentlichen nur durch die Aerosole der Atmosphäre gestreut wird und dabei lediglich ein unwesentlicher Teil des ersten Lichts durch die Moleküle der Atmosphäre gestreut wird,

eine zweite Lichtquelle (118), wobei die zweite Lichtquelle (11B) das Erzeugen eines Strahls eines zweiten Lichts (13B) ermöglicht, wobei das zweite Licht (13B) eine zweite Wellenlänge (740) umfasst, die sicherstellt, dass das zweite Licht (13B) nur entweder durch Moleküle oder Aerosole der Atmosphäre (20) gestreut wird, zumindest eine Quellenoptik (15), die mit der ersten und der zweiten Lichtquelle (13A, 13B) zusammenwirkt, wobei die zumindest eine Quellenoptik (15) sicherstellt, dass entweder der Strahl des ersten Lichts (13A) oder der Strahl des zweiten Lichts (13B) in die Atmosphäre (20) gestreut wird, um sicherzustellen, dass entweder das erste Licht (13A) oder das zweite Licht (13B) durch die Atmosphäre (20) gestreut und dabei entsprechend zu erstem Streulicht bzw. zweitem Streulicht wird, wobei eine Wellenlängenverteilung entweder des gestreuten ersten Lichts (13A) und des gestreuten zweiten Lichts (13B) als Reaktion auf die zumindest eine physikalische Eigenschaft der Atmosphäre (20) erfolgt;

zumindest ein Interferometer (31), wobei das zumindest eine Interferometer (31) sicherstellt, dass entweder das von der Atmosphäre (20) gestreute erste Licht (13A) oder das von der Atmosphäre (20) gestreute zweite Licht (13B) empfangen wird und zumindest ein entsprechendes erstes Interferenzmuster als Reaktion erzeugt wird;

zumindest ein Erfassungssystem (34), wobei das zumindest eine Erfassungssystem (34) das Erfassen des zumindest einen Interferenzmusters ermöglicht;

zumindest einen Prozessor (124), wobei der zumindest eine Prozessor (124) in Zusammenwirken mit dem zumindest einen Erfassungssystem (34) das Erfassen der zumindest einen physikalischen Eigenschaft der Atmosphäre (20) aus dem zumindest einen Interferenzmuster ermöglicht,

der zumindest eine Prozessor (124) in Zusammenwirken mit dem zumindest einen Erfassungssystem (34) das Erfassen zumindest eines Maßes eines Signal-Rausch-Abstands und eines Maßes eines Aerosol-Molekül-Verhältnisses aus dem zumindest einen Interferenzmuster ermöglicht, wobei das Aerosol-Molekül-Verhältnis ein Verhältnis einer Menge des durch die Aerosole in der Atmosphäre (20) gestreuten ersten Lichts des Strahls des zweiten Lichts (13B) zu einer Menge des von den Molekülen in der Atmosphäre (20) gestreuten Lichts des zweiten Lichtstrahls (13B) darstellt, wobei

der zumindest eine Prozessor (124) das Auswählen entweder des Strahls des ersten Lichts (13A) oder des Strahls des zweiten Lichts (13B) zum Projizieren in die Atmosphäre (20) zu einem zweiten Zeitpunkt nach dem ersten Zeitpunkt ermöglicht, wobei der Vorgang des Auswählens entweder des Strahls des ersten Lichts (13A) oder des zweiten Strahls zweiten Lichts (13B) zum Projizieren in die Atmosphäre (20) als Reaktion auf zumindest entweder das Maß des Signal-Rausch-Abstands oder das Maß des Aerosol-Molekül-Verhältnisses als Reaktion auf den Strahl des zweiten Lichts (13B) erfolgt, und wobei der zumindest eine Prozessor (124) des Weiteren das Auswählen des Strahls des ersten Lichts (13A) zur Projektion in die Atmosphäre (20) zu einem zweiten Zeitpunkt ermöglicht, wenn das Maß des Signal-Rauschabstands oder des Aerosol-Molekül-Verhältnisses einen Grenzwert übersteigt, und das Auswählen des Strahls des zweiten Lichts (13B) zur Projektion in die Atmosphäre (20) zu einem zweiten Zeitpunkt ermöglicht, wenn das Maß des Signal-Rausch-Ab-stands oder des Aerosol-Molekül-Verhältnisses den Grenzwert unterschreitet,

**9.** System zur Atmosphärenmessung nach Anspruch 8, bei dem die zumindest eine physikalische Eigenschaft zumindest entweder ein auf eine Geschwindigkeit der Atmosphäre (20) reagierendes Maß, ein auf eine Temperatur der Atmosphäre (20) reagierendes Maß oder ein auf eine Dichte der Atmosphäre (20) reagierendes Maß umfasst.

10. System zur Atmosphärenmessung nach Anspruch 8, bei dem die zumindest eine Quellenoptik eine erste und eine zweite Quellenoptik umfasst, wobei die erste Lichtquelle mit der ersten Quellenoptik zusammenwirkt und die zweite Lichtquelle mit der zweiten Quellenoptik zusammenwirkt.

11. System zur Atmosphärenmessung nach Anspruch 8, bei dem die erste Lichtquelle und die zweite Lichtquelle mit einer gemeinsamen Quellenoptik zusammenwirken.

12. System zur Atmosphärenmessung nach Anspruch 8, des Weiteren umfassend:

    Einen Spiegel (742), der ermöglicht, dass die erste Lichtquelle (11A) und die zweite Lichtquelle (11B) mit der gemeinsamen Quellenoptik (15) zusammenwirken; und
    einen Stellantrieb unter Steuerung des zumindest einen Prozessors (124), der ermöglicht, dass sich der Spiegel (742) in einer von zwei Stellungen anordnen lässt, wobei der Spiegel in seiner ersten Stellung eine Projektion des ersten Strahls des ersten Lichts (13A) von der ersten Lichtquelle (11A) durch die gemeinsame Quellenoptik (15) in die Atmosphäre (20) ermöglicht, und der Spiegel (742) in seiner zweiten Stellung eine Projektion des zweiten Strahls des zweiten Lichts (13B) von der zweiten Lichtquelle (11B) durch die gemeinsame Quellenoptik (15) in die Atmosphäre (20) ermöglicht.

13. System zur Atmosphärenmessung nach Anspruch 12, bei dem die erste Stellung eine erste Drehstellung umfasst, und die zweite Stellung eine zweite Drehstellung umfasst, wobei der Strahl des ersten Lichts (13A) von einer ersten Oberfläche des Spiegels (742) reflektiert wird, wenn sich der Spiegel (742) in seiner ersten Drehstellung befindet, und der Strahl des zweiten Lichts (13B) von einer zweiten Oberfläche des Spiegels (742) reflektiert wird, wenn sich der Spiegel (742) in seiner zweiten Drehstellung befindet.

14. System zur Atmosphärenmessung nach Anspruch 8, des Weiteren umfassend zumindest eine Empfangsoptik (32), wobei die zumindest eine Empfangsoptik (32) den Empfang entweder des von der Atmosphäre (20) gestreuten ersten Lichts oder des von der Atmosphäre (20) gestreuten zweiten Lichts vor dem zumindest einen Interferometer (31) ermöglicht.

15. System zur Atmosphärenmessung nach Anspruch 14, bei dem die zumindest eine Empfangsoptik umfasst:

    Eine erste Empfangsoptik, die zum Empfang des von der Atmosphäre (20) gestreuten zweiten Lichts in Zusammenwirken mit der zweiten Lichtquelle (11B) ausgelegt ist; und
    eine zweite Empfangsoptik, die zum Empfang des von der Atmosphäre (20) gestreuten ersten Lichts in Zusammenwirken mit der ersten Lichtquelle (11A) ausgelegt ist.

16. System zur Atmosphärenmessung nach Anspruch 14, bei dem die zumindest eine Empfangsoptik eine gemeinsame Empfangsoptik (15) umfasst, und das zumindest eine Interferometer (31) ein gemeinsames Interferometer umfasst, das zum Empfang entweder des gestreuten ersten Lichts (13A) oder des gestreuten zweiten Lichts (13B) von der gemeinsamen Empfangsoptik (15) ausgelegt ist.

17. System zur Atmosphärenmessung nach Anspruch 8, des Weiteren umfassend einen ersten und einen zweiten Bandpassfilter (88A, 88B), die mit dem zumindest einen Interferometer (31) zusammenwirken, wobei der erste Bandpassfilter (88A) in Zusammenwirken mit der ersten Lichtquelle (11A) das Durchlassen der ersten Wellenlänge (738) ermöglicht und der zweite Bandpassfilter (88B) in Zusammenwirken mit der zweiten Lichtquelle (11B) das Durchlassen der zweiten Wellenlänge (740) ermöglicht.

18. System zur Atmosphärenmessung nach Anspruch 8, bei dem das zumindest eine Interferometer (31) aus zumindest einem Fabry-Pérot-Interferometer oder alternativ entweder einem räumlich-heterodynen Spektrometer oder einem asymmetrischen räumlich-heterodynen Doppler-Spektrometer besteht.

19. System zur Atmosphärenmessung nach Anspruch 8, des Weiteren umfassend zumindest einen Kollimator (33), der mit dem zumindest einen Interferometer (31) zusammenwirkt, um ein Kollimieren entweder des von der Atmosphäre (20) gestreuten ersten Lichts oder des von der Atmosphäre (20) gestreuten zweiten Lichts vor Erzeugung des zumindest einen Interferenzmuster zu ermöglichen.

20. System zur Atmosphärenmessung nach Anspruch 8, bei dem das zumindest eine Erfassungssystem ein direktes Erfassungssystem oder ein heterodynes Erfassungssystem der Atmosphäre (20) umfasst.

**Revendications**

1. Procédé de détection à distance d'une atmosphère (20), comprenant :

   la projection d'un parmi un premier faisceau d'une première lumière (13A) et un second faisceau d'une seconde lumière (13B) dans une atmosphère (20) à un premier moment dans le temps, de façon à permettre la diffusion d'une parmi ladite première lumière (13A) et ladite seconde lumière (13B) par ladite atmosphère (20), comme une lumière correspondante parmi une première lumière diffusée et une seconde lumière diffusée, dans lequel ladite première lumière (13A) comprend une première longueur d'onde (738) qui permet la diffusion de ladite première lumière (13A) sensiblement uniquement à partir desdits aérosols de ladite atmosphère, pas plus d'une partie insubstantielle de ladite première lumière est diffusée par lesdites molécules de ladite atmosphère, et dans lequel ladite seconde lumière (13B) comprend une seconde longueur d'onde (740) qui permet une diffusion de ladite seconde lumière (13B) à partir de molécules ou d'aérosols de ladite atmosphère (20), dans lequel une distribution de longueur d'onde de ladite une parmi ladite première lumière diffusée et ladite seconde lumière diffusée est sensible à au moins une propriété physique de ladite atmosphère (20) ;
   la réception d'une parmi ladite première lumière diffusée et ladite seconde lumière diffusée, diffusée à partir de ladite atmosphère (20) ;
   la génération d'au moins un premier modèle d'interférence sensible à ladite une parmi ladite première lumière diffusée et ladite seconde lumière diffusée, dans lequel ledit au moins un premier modèle d'interférence est sensible à ladite distribution de longueurs d'onde de ladite une parmi ladite première lumière diffusée et ladite seconde lumière diffusée ;
   la détection de ladite au moins une propriété physique de ladite atmosphère (20) à partir d'au moins un modèle d'interférence, dans lequel au moins un élément parmi une mesure du rapport signal-bruit et une mesure d'un rapport aérosol-moléculaire est détecté à partir dudit au moins un premier modèle d'interférence, dans lequel ledit rapport aérosol-moléculaire est un rapport entre une quantité de ladite lumière diffusée dudit faisceau de seconde lumière (13B) par lesdits aérosols dans ladite atmosphère (20) et une quantité de ladite lumière diffusée dudit faisceau de seconde lumière (13B) diffusé par lesdites molécules dans ladite atmosphère (20) ; dans lequel un parmi ledit faisceau de première lumière (13A) et ledit faisceau de seconde lumière (13B) est sélectionné pour être projeté dans ladite atmosphère (20) à un second moment dans le temps après ledit premier moment dans le temps,
   dans lequel l'opération de sélection dudit un parmi ledit faisceau de première lumière (13A) et ledit faisceau de seconde lumière (13B) à projeter dans ladite atmosphère (20) audit second moment dans le temps est sensible à ladite au moins une parmi ladite mesure du rapport signal-bruit et ladite mesure dudit rapport aérosol-moléculaire ; et dans lequel ledit faisceau de première lumière (13A) est sélectionné pour projection dans ladite atmosphère (20) audit second moment dans le temps, si ladite mesure du rapport signal-bruit ou dudit rapport aérosol-moléculaire est supérieure à un seuil, et dans lequel ledit faisceau de seconde lumière (13B) est sélectionné pour projection dans ladite atmosphère (20) audit second moment dans le temps, si ladite mesure du rapport signal-bruit ou dudit rapport aérosol-moléculaire est inférieure audit seuil.

2. Procédé de détection à distance d'une atmosphère (20) selon la revendication 1, comprenant en outre la génération dudit un parmi ledit faisceau de première lumière (13A) et ledit faisceau de seconde lumière (13B) avec une source correspondante parmi une première source de lumière (11A) et une seconde source de lumière (11B) audit premier moment dans le temps.

3. Procédé de détection à distance d'une atmosphère (20) selon la revendication 2, comprenant en outre l'activation de ladite une parmi ladite première source de lumière (11A) et ladite seconde source de lumière (11B), à partir d'un état inactivé avant l'opération de génération dudit un parmi ledit faisceau de première lumière (13A) et ledit faisceau de seconde lumière (13B) audit premier moment dans le temps.

4. Procédé de détection à distance d'une atmosphère (20) selon la revendication 1, dans lequel, lorsqu'ils sont projetés dans ladite atmosphère (20), ledit faisceau de première lumière (13A) et ledit faisceau de seconde lumière (13B) sont chacun projetés à travers un ensemble commun d'optiques sources (15), comprenant en outre la sélection dudit un parmi ledit premier faisceau de première lumière (13A) et ledit second faisceau de seconde lumière (13B), en positionnant un miroir (742), qui permet de réfléchir au moins un parmi ledit premier faisceau de première lumière (13A) et ledit second faisceau de seconde lumière (13B) à partir d'une source correspondante (11A, 11B) vers ledit ensemble commun d'optiques sources (15).

**5.** Procédé de détection à distance d'une atmosphère (20) selon la revendication 1, comprenant en outre la filtration optique passe-bande de ladite une parmi ladite première lumière diffusée (13A) et ladite seconde lumière diffusée (13B) avant l'opération de génération dudit au moins un premier modèle d'interférence,

dans lequel l'opération de filtration optique passe-bande comprend le passage d'une gamme de longueurs d'ondes de ladite une parmi ladite première lumière diffusée (13A) et ladite seconde lumière diffusée (13B) couvrant une longueur d'onde de ladite première lumière ou seconde lumière correspondantes.

**6.** Procédé de détection à distance d'une atmosphère (20) selon la revendication 1, dans lequel l'opération de génération dudit au moins un premier modèle d'interférence comprend l'interférence de ladite une parmi ladite première lumière diffusée et ladite seconde lumière diffusée avec ladite une parmi ladite première lumière (13A) et ladite seconde lumière (13B) correspondantes.

**7.** Procédé de détection à distance d'une atmosphère (20) selon la revendication 1, comprenant en outre la génération simultanée d'un second modèle d'interférence sensible à ladite une parmi ladite première lumière (13A) et ladite seconde lumière (13B), dans lequel ledit au moins un premier modèle d'interférence et ledit second modèle d'interférence sont générés par un interféromètre commun, et l'opération de détection de ladite au moins une propriété physique de ladite atmosphère (20) est en outre sensible audit second modèle d'interférence.

**8.** Système de mesure atmosphérique, comprenant :

une première source de lumière (11A), dans laquelle ladite première source de lumière (11A) permet la génération d'un faisceau de première lumière (13A), ladite première lumière (13A) comprend une première longueur d'onde (738) qui permet la diffusion de ladite première lumière (13A) sensiblement uniquement à partir desdits aérosols de ladite atmosphère, et pas plus d'une partie insubstantielle de ladite première lumière est diffusée par lesdites molécules de ladite atmosphère,

une seconde source de lumière (11B), dans laquelle ladite seconde source de lumière permet la génération d'un faisceau de seconde lumière (13B) comprenant une seconde longueur d'onde (740) qui permet la diffusion de ladite seconde lumière (13B) à partir des molécules ou des aérosols d'une atmosphère (20),

au moins un ensemble d'optiques sources (15) en coopération avec lesdites première et seconde sources de lumière (13A, 13B), dans lequel ledit au moins un ensemble d'optiques sources (15) permet de projeter ledit faisceau de première lumière (13A) ou ledit faisceau de seconde lumière (13B) dans ladite atmosphère (20), de façon à permettre la diffusion d'une parmi ladite première lumière (13A) et ladite seconde lumière (13B) par ladite atmosphère (20) comme une lumière correspondante parmi une première lumière diffusée et une seconde lumière diffusée, dans lequel

une distribution de longueur d'onde de ladite une parmi ladite première lumière diffusée (13A) et ladite seconde lumière diffusée (13B) est sensible à au moins une propriété physique de ladite atmosphère (20) ;

au moins un interféromètre (31), dans lequel ledit au moins un interféromètre (31) permet de recevoir ladite première lumière diffusée (13A) ou ladite seconde lumière diffusée (13B) à partir de ladite atmosphère (20) et de générer au moins un premier modèle d'interférence correspondant en réponse à celles-ci,

au moins un système de détection (34), dans lequel ledit au moins un système de détection (34) permet de détecter ledit au moins un modèle d'interférence ;

au moins un processeur (124), dans lequel ledit au moins un processeur (124), en coopération avec ledit au moins un système de détection (34) permet de détecter ladite au moins une propriété physique de ladite atmosphère (20), à partir dudit au moins un modèle d'interférence,

ledit au moins un processeur (124) en coopération avec ledit au moins un système de détection (34) permet de détecter au moins un élément parmi une mesure du rapport signal-bruit et une mesure du rapport aérosol-moléculaire, à partir dudit au moins un premier modèle d'interférence, ledit rapport aérosol-moléculaire étant un rapport entre une quantité de ladite première lumière diffusée dudit faisceau de seconde lumière (13B) par lesdits aérosols dans ladite atmosphère (20) et une quantité de ladite lumière diffusée dudit second faisceau de lumière (13B) diffusé par lesdites molécules dans ladite atmosphère (20), dans lequel ledit au moins un processeur (124) permet de sélectionner un parmi ledit faisceau de première lumière (13A) et ledit faisceau de seconde lumière (13B) à projeter dans ladite atmosphère (20) à un second moment dans le temps, après ledit premier moment dans le temps, dans lequel

l'opération de sélection dudit un parmi ledit faisceau de première lumière (13A) et ledit second faisceau de seconde lumière (13B) à projeter dans ladite atmosphère (20) est sensible à au moins un élément parmi ladite mesure du rapport signal-bruit et ladite mesure dudit rapport aérosol-moléculaire sensible audit faisceau de seconde lumière (13B) et dans lequel ledit au moins un processeur (124) permet en outre de sélectionner ledit faisceau de première lumière (13A) pour projection dans ladite atmosphère (20) audit second moment dans le temps, si ladite mesure du rapport signal-bruit ou du rapport aérosol-moléculaire est supérieure à un seuil, et de sélectionner ledit faisceau de seconde lumière (13B) pour projection dans ladite atmosphère (20) audit second moment dans le temps, si ladite mesure du rapport signal-bruit ou dudit rapport aérosol-moléculaire est inférieure audit seuil.

9. Système de mesure atmosphérique selon la revendication 8, dans lequel ladite au moins une propriété physique comprend au moins un élément parmi une mesure sensible à une vitesse de ladite atmosphère (20), une mesure sensible à une température de ladite atmosphère (20) et une mesure sensible à une densité de ladite atmosphère (20).

10. Système de mesure atmosphérique selon la revendication 8, dans lequel ledit au moins un ensemble d'optiques sources comprend un premier ensemble et un second ensemble d'optiques sources, ladite première source de lumière coopérant avec ledit premier ensemble d'optiques sources, et ladite seconde source de lumière coopérant avec ledit second ensemble d'optiques sources.

11. Système de mesure atmosphérique selon la revendication 8, dans lequel lesdites première et seconde sources de lumière coopèrent avec un ensemble commun d'optiques sources.

12. Système de mesure atmosphérique selon la revendication 8, comprenant en outre :

un miroir (742) qui permet auxdites première (11A) et seconde sources de lumière (11B) de coopérer avec ledit ensemble commun d'optiques sources (15) ; et
un actionneur sous contrôle dudit au moins un processeur (124) qui permet de positionner ledit miroir (742) dans l'une des deux positions, dans lequel, dans une première position, ledit miroir permet de projeter ledit premier faisceau de première lumière (13A) à partir de ladite première source de lumière (11A) par ledit ensemble commun d'optiques sources (15) dans ladite atmosphère (20), et dans une seconde position, ledit miroir (742) permet de projeter le second faisceau de seconde lumière (13B) à partir de ladite seconde source de lumière (11B) par ledit ensemble commun d'optiques sources (15) dans ladite atmosphère (20).

13. Système de mesure atmosphérique selon la revendication 12, dans lequel ladite première position comprend une première position en rotation et ladite seconde position comprend une seconde position en rotation, dans lequel ledit faisceau de première lumière (13A) est réfléchi à partir d'une première surface dudit miroir (742), quand ledit miroir (742) est dans ladite première position en rotation et dans lequel ledit faisceau de seconde lumière (13B) est réfléchi à partir d'une seconde surface dudit miroir (742), quand ledit miroir (742) est dans ladite seconde position de rotation.

14. Système de mesure atmosphérique selon la revendication 8, comprenant en outre au moins un ensemble d'optiques de réception (32), dans lequel ledit au moins un ensemble d'optiques de réception (32) permet de recevoir ladite première lumière diffusée ou ladite seconde lumière diffusée à partir de ladite atmosphère (20), avant ledit au moins un interféromètre (31).

15. Système de mesure atmosphérique selon la revendication 14, dans lequel ledit au moins un ensemble d'optiques de réception comprend :

un premier ensemble d'optiques de réception adaptés pour recevoir ladite seconde lumière diffusée à partir de ladite atmosphère (20) en coopération avec ladite seconde source de lumière (11B) ; et
un second ensemble d'optiques de réception adaptés pour recevoir ladite première lumière diffusée à partir de ladite atmosphère (20) en coopération avec ladite première source de lumière (11A).

16. Système de mesure atmosphérique selon la revendication 14, dans lequel ledit au moins un ensemble d'optiques de réception comprend un ensemble commun d'optiques de réception (15), et ledit au moins un interféromètre (31) comprend un interféromètre commun adapté pour recevoir ladite première lumière diffusée (13A) ou ladite seconde lumière diffusée (13B) à partir dudit ensemble commun d'optiques de réception (15).

17. Système de mesure atmosphérique selon la revendication 8, comprenant en outre des premier et second filtres passe-bandes (88A, 88B) en coopération avec ledit au moins un interféromètre (31), dans lequel ledit premier filtre passe-bande (88A) permet de passer ladite première longueur d'onde (738) en coopération avec ladite première source de lumière (11A), ledit second filtre passe-bande (88B) permet de passer ladite seconde longueur d'onde (740) en coopération avec ladite seconde source de lumière (11B).

18. Système de mesure atmosphérique selon la revendication 8, dans lequel ledit au moins un interféromètre (31) comprend au moins un interféromètre de Fabry Pérot ou, en variante, un spectromètre hétérodyne spatial ou un spectromètre hétérodyne spatial asymétrique Doppler.

19. Système de mesure atmosphérique selon la revendication 8, comprenant en outre au moins un collimateur (33) en coopération avec ledit au moins un interféromètre (31), de façon à permettre la collimation de ladite première lumière diffusée ou de ladite seconde lumière diffusée à partir de ladite atmosphère (20), avant la génération dudit au moins un premier modèle d'interférence.

20. Système de mesure atmosphérique selon la revendication 8, dans lequel au moins un système de détection comprend un système de détection direct, ou un système de détection hétérodyne de ladite atmosphère (20).

FIG. 1a

FIG. 1b

FIG. 1c

FIG. 1 d

**FIG. 2**

**FIG. 3 a**

FIG. 3 b

**FIG. 4**

FIG. 5

FIG. 6

31'''''',31''''''i

714.1

122b

728.1

726.1

728.2

714.2

30.1',30.2',
30.3',30.4'

706

730,730'

105

706'

726.2

33

Optics All Fused Silica

37''

Y

X

Z

37

37''

734,734'

Fourier Transform of Spectra
with Doppler Offset

716i–v

Imaging
Detector

34,34.5,34.5'

FIG. 7 a

FIG. 7 c

Magnified View of Image

FIG. 7 b

FIG. 8 a

FIG. 8 b

EP 2 671 103 B1

*FIG. 9 a*

*FIG. 9 b*

42

SHS/DASH Interferometer

Filter System

31"',31""'

31"",31"""

33^B'

136.1
136

33^A'   704,704'

33^A

33.1^A

98"

98'

54

32,32'

30

17

20,20',20"

46

R

28

32"

448

98

Source Optics

15,15'

39

37

88

33^B'

125d

125d

31.2^i"",31.2^i"""

324

90

90'   308

33^B   125c

125b

Source Optics

Filter

Source

11,11'

92   13,420

108

11

Camera

34,34.5,34.5'

640.1

640

704,704'

90"
90.6"

125c

33^B

Mask

310

324

138,138.6

125b

**FIG. 10 a**

36

Processor
51,106

53

124   Memory

Y

X   Z

716^Ref

716^i

716^Ref

90",90.6"

138.6'

90'

Z

Z

Z

X

X

X

**FIG. 10 d**   **FIG. 10 c**   **FIG. 10 b**

**FIG. 11 a**

**FIG. 11 b**

EP 2 671 103 B1

FIG. 12 a

FIG. 12 b

FIG. 12 c

FIG. 12 d

FIG. 13 a

FIG. 13 d    FIG. 13 c    FIG. 13 b

FIG. 14 a

FIG. 14 b

Source

Receive Lens
Receive Lens

Pyramid

Sky Mask

Beam Splitter

Narrow Band Filter

SHS Interferometer

Reference Mask

Rotating Diffuser 308

Integrating Sphere 310

Motor 309

Reference

CCD

FOV 1, $716^{Range\ 1}$
Reference, $716^{Ref}$
FOV 2, $716^{Range\ 2}$

$R_1$
$R_2$

FIG. 15

FIG. 16

EP 2 671 103 B1

1320'
Start
Aerosol Or
Molecular

1320

1321
UV Source OFF
IR Source ON

1322
Measure Velocity,
SNR
Using IR Source

1323
SNR>Threshold?   Y

N

1320''
Start
Molecular
Only

1324
IR Source OFF
UV Source ON

1325
Measure Velocity,
[Temperature, Density,]
Aerosol-To-Molecular Ratio
Using UV Source

Y

1327
Measure
Temperature
Or Density   N

1326
Aerosol-To-Molecular Ratio
>Threshold?   N

Y

**FIG. 17**

FIG. 18

EP 2 671 103 B1

FIG. 19

FIG. 23

FIG. 21

FIG. 20

Start Power
Validation —1370

Directly Measure
Velocity And Density
1371— At Remote Locations
Using LIDAR

—1372

Simultaneously
Measure
Power Output
From Wind Turbine

Calculate Average
Measure(s) Of Or Responsive To
1373— Wind Power Flux Density
At Actual Wind Turbine
Location(s)

Wind Turbine
1374— Power Estimator

Calculate Energy Generating
Potential Of Wind Turbine(s)
1375— At Actual Wind Turbine
Location(s)

Calculate Average
Generated By —1376
Wind Turbine(s)

Compare
Potential And Actual
Energy Output Of
Wind Turbine

—1377

Output
Validation Results —1378

FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006262324 A1
- US 2003219252 A1
- US 4483614 A
- US 5059027 A
- US A7535572 B2

- US 20090231592 A
- US A7773229 B2
- US 20090231592 A1
- US 7535572 A
- US 7495774 A

### Non-patent literature cited in the description

- **JOHN M. HARLANDER ; FRED L. ROESLER ; JOEL G. CARDON ; CHRISTOPH R. ENGLERT ; ROBERT R. CONWAY.** SHIMMER: a spatial heterodyne spectrometer for remote sensing of Earth's middle atmosphere. *Applied Optics,* 2002, vol. 41, 1343-1352
- **JOHN M. HARLANDER ; FRED L.ROESLER ; CHRISTOPH R. ENGLERT ; JOEL CARDON ; JEFF WIMPERIS.** Spatial Heterodyne Spectroscopy for High Spectral Resolution Space-Based Remote Sensing. *Optics & Photonics News,* 2004, vol. 551, 46-51

- **IAN POWELL ; PAVEL CHEBEN.** Modeling of the generic spatial heterodyne spectrometer and comparison with conventional spectrometer. *Applied Optics,* 2006, vol. 36, 9079-9086
- **CHRISTOPH R. ENGLERT ; DAVID D. BABCOCK ; JOHN M. HARLANDER.** Doppler asymmetric spatial heterodyne spectroscopy (DASH): concept and experimental demonstration. *Applied Optics,* 2007, vol. 29, 7297-7307